# FASCICULE DE BREVET EUROPEEN

(11) **EP 2 796 905 B1**
(45) Date de publication et mention de la délivrance du brevet: **13.04.2016**
(21) Numéro de dépôt: 14165234.7
(22) Date de dépôt: 17.04.2014
(51) Int. Cl.: G02B 5/122, G01B 11/26, G02B 27/00

(54) **Systeme optique de mesure d'orientation et de position à source ponctuelle et coins de cube à face d'entrée polychrome**
Optisches System zur Richtungs- und Positionsmessung mit punktförmiger Quelle und Würfelecken mit polychromer Eintrittsfläche
Optical system for measuring orientation and position with an isolated source and cube corners with polychromatic inlet surface

(30) Priorité: 26.04.2013 FR 1300971
(43) Date de publication de la demande: 29.10.2014
(73) Titulaire: THALES, 92400 Courbevoie (FR)
(72) Inventeur: Barbier, Bruno, 33000 BORDEAUX (FR); Potin, Laurent, 33187 LE HAILLAN Cedex (FR); Rouzes, Siegfried, 33185 LE HAILLAN (FR)
(74) Mandataire: Bréda, Jean-Marc

(56) Documents cités:
- EP-A1- 2 554 941
- EP-A1- 2 554 942
- GB-A- 2 301 968
- US-B1- 7 515 257

## Description

Le domaine de l'invention est celui des dispositifs optiques permettant de mesurer l'orientation d'un objet dans l'espace sans contact. Il existe divers domaines d'applications possibles mais l'application principale est la détection de posture de casque de pilote d'aéronef, permettant ainsi de projeter dans sa visière une image en superposition exacte sur le paysage extérieur ou d'asservir différents systèmes de l'appareil sur son regard. La précision recherchée dans de tels systèmes est de l'ordre du milliradian.

Il existe différentes techniques optiques permettant de faire de la mesure d'orientation sur casque. Généralement, on installe sur le casque des éléments remarquables qui sont repérés par un système de caméras. La position des images de ces éléments remarquables permet de déterminer par calcul l'orientation du casque.

Par exemple, un tel système de détection de la posture d'un casque est présenté dans le document EP 2 554 941 A1.

Ces éléments peuvent être passifs ou actifs. Les éléments passifs sont éclairés par une source externe. On peut utiliser, à cette fin, des coins de cube rétroréfléchissants ou rétro-réflecteurs. Il suffit de disposer les organes optiques d'émission et de réception sur le même axe.

Ces systèmes à rétro-réflecteurs sont peu sensibles à l'éclairement solaire. Ils sont combinés à un des types de dispositifs fixes suivants :
- une caméra. Mais, dans ce type de dispositif, la qualité de l'image se dégrade lors des translations du casque ;
- un objectif combiné pour l'éclairage et la prise de vue qui fournit une grande profondeur de champ. L'encombrement de ce type de dispositif est significatif ;
- une source ponctuelle associée à un capteur matriciel sans objectif optique.

Dans ces deux dernières dispositions, le réflecteur est équipé d'un masque transmissif en partie centrale et opaque en périphérie appliqué sur sa face d'entrée. Le contour du masque est en forme de parallélogramme, matérialisant ainsi l'orientation de deux directions fixes du casque. L'orientation du casque est calculée par analyse de la forme du contour projeté sur le capteur. L'analyse porte sur les transitions entre les zones lumineuses et obscures du reflet reçu par le capteur.

Cette dernière disposition aboutit à un dispositif optique simple et ayant une grande profondeur de champ. Cependant, pour un coin de cube élémentaire, le champ angulaire de détection reste limité pour les raisons suivantes :
- Un réflecteur en coin de cube offre un champ angulaire théorique d'angle solide π/2 stéradian, mais comme on le verra dans la suite de la description, celui-ci est fortement diminué par les contraintes géométriques de la forme du masque ;
- La combinaison de plusieurs réflecteurs en coin de cube est réalisable. Par exemple, on peut ainsi associer quatre réflecteurs adjacents selon une pyramide à base carrée, à condition de discriminer les reflets des réflecteurs entre eux et d'assurer la continuité de mesure d'un réflecteur à l'autre, ce qui suppose que le reflet a une existence continue et une dimension minimale permettant l'analyse.

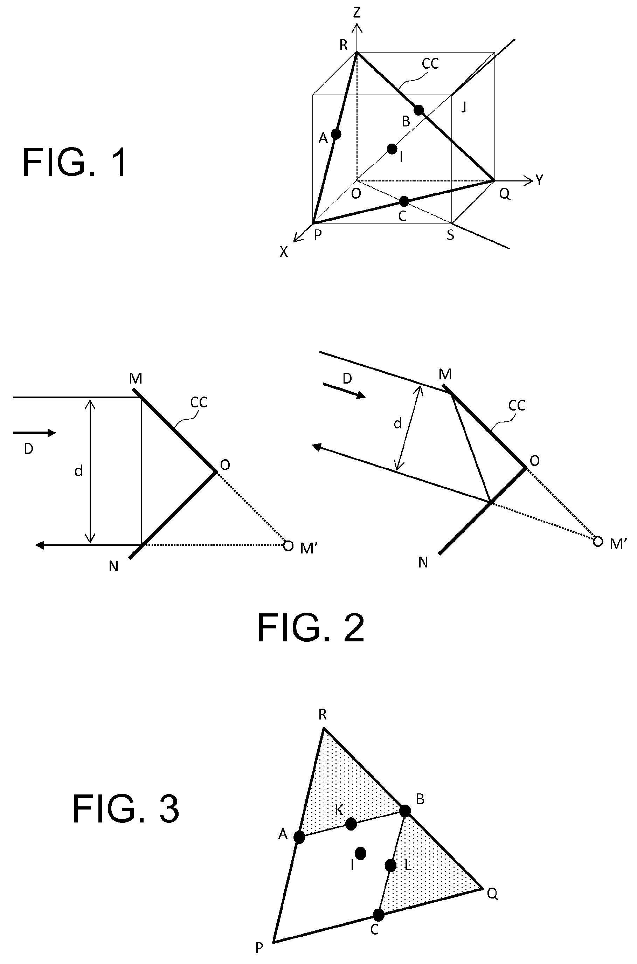

A titre d'exemple, un réflecteur en coin de cube CC est représenté sur la figure 1. Il comporte trois faces réfléchissantes triangulaires orthogonales deux à deux POQ, QOR et POR et une face d'entrée transparente PQR. Cette face comporte un masque en forme de parallélogramme non représenté sur la figure 1. Cette face d'entrée est, par exemple, normale à la diagonale OJ du cube d'origine, le triangle PQR est alors équilatéral, son centre est le point I.

Le champ angulaire de ce réflecteur est limité par la forme du réflecteur et par celle du masque comme on le voit sur la figure 2 qui représente une vue en coupe du coin de cube CC. Pour une direction d'incidence donnée D de rayons lumineux sur ce coin de cube, les rayons incident et réfléchi sont symétriques par rapport au sommet O du coin de cube. Ces deux rayons sont donc parallèles et symétriques par rapport à l'axe de direction D qui passe par le sommet O. Ces deux rayons définissent, pour la direction D, l'épaisseur maximale « d » et la position du faisceau qui est intégralement réfléchi. Cette épaisseur d, fonction de la taille des faces réfléchissantes OM et ON, est donc maximale quand la direction D est parallèle à la diagonale du coin de cube et nulle quand la direction D est parallèle à une des faces réfléchissantes.

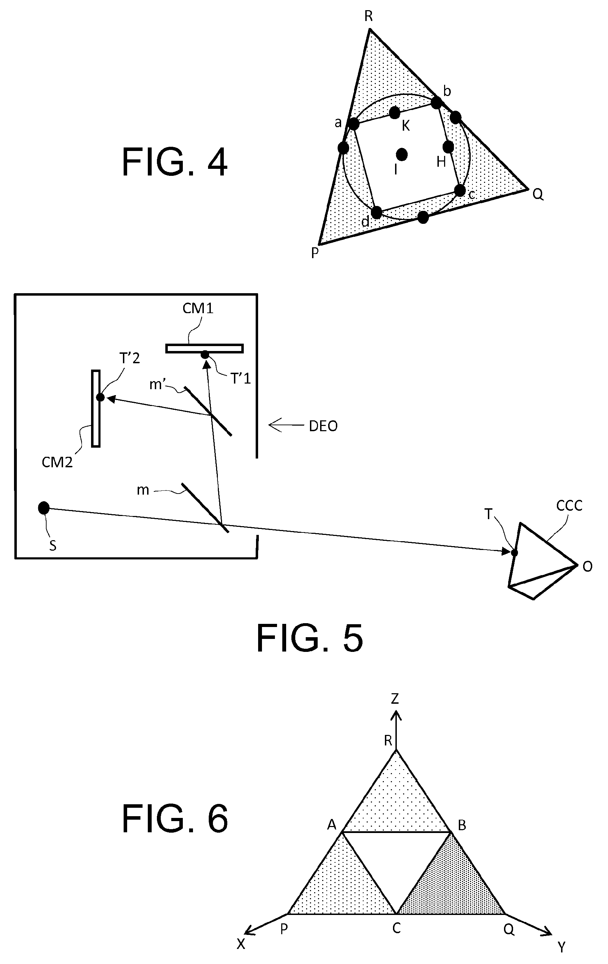

Le champ angulaire maximal en incidence ou en réflexion du réflecteur est donc donné par les trois plans réfléchissants POQ, QOR et POR. On peut calculer les différentes valeurs de ce champ angulaire en fonction du point d'impact du rayon moyen passant par le sommet O sur le masque. A titre de premier exemple, pour un masque selon le parallélogramme ABCP de la figure 3 représenté en blanc sur cette figure, le champ angulaire par rapport à la diagonale OJ est d'environ 55 degrés pour le point P, d'environ 35 degrés pour les sommets A, B et C, milieux des côtés du triangle PQR et de seulement 19 degrés pour les milieux K et L des segments AB et BC. A titre de second exemple, pour un masque selon le carré abcd centré dans PQR dont les sommets sont sur le cercle inscrit dans le triangle PQR de la figure 4, le champ angulaire est d'environ 35 degrés pour les sommets a, b, c, d et de 26 degrés pour les milieux, comme H et K, de chaque côté du carré abcd.

Ces limites de champ sont notablement éloignées de celles correspondant à l'étendue angulaire souhaitée autour de la diagonale OIJ, dans le demi-espace limité par le plan PQR.

Le système selon l'invention remédie à cette insuffisance. L'angle solide obtenu est celui défini par le sommet O et l'intégralité du triangle PQR, c'est-à-dire par les trois plans du trièdre trirectangle OXYZ, sa valeur est π/2 stéradian.

Pour obtenir un grand champ angulaire, le système selon l'invention comporte des coins de cube ayant les deux caractéristiques originales suivantes :
- Le masque qui occupe toute la surface de la face d'entrée du réflecteur est constitué de la juxtaposition de pupilles colorées filtrant chacune une couleur particulière, le réflecteur étant éclairé en lumière blanche. L'orientation du casque est calculée par l'analyse de la forme des contours colorés, à savoir les limites entre teintes du reflet polychrome projeté sur le capteur de type mosaïque couleur. Chaque pupille colorée participe à la couverture d'une partie du champ angulaire et l'ensemble couvre l'étendue de π/2 sr souhaitée ;
- Un codage spécifique réalisé par un marquage local est appliqué au détail du contour, à la couleur et à la transmission optique des zones colorées des pupilles de chaque réflecteur. Le détecteur matriciel fonctionne non plus en mode binaire, mais sur plusieurs niveaux de teintes de couleur. Le codage permet de discriminer une grande diversité de reflets différents. Cette propriété est mise à profit pour discriminer à la fois les réflecteurs, mais aussi les reflets, issus de deux réflecteurs voisins, superposés sur le capteur.

Des combinaisons compactes de réflecteurs selon l'invention permettent d'assurer la mesure de la détection de position dans une grande étendue angulaire.

De plus, la méthode d'analyse n'est sensible, ni à la variation de puissance lumineuse de la source, ni à la variation de sa colorimétrie, ni à la variation de distance source/réflecteur, due à la position du casque.

Plus précisément, l'invention a pour objet un système de détection de la posture d'un objet mobile dans l'espace comprenant un dispositif fixe électro-optique d'orientation connue comprenant au moins une première source d'émission, des moyens d'analyse d'images et un ensemble optique comprenant au moins un coin de cube optique disposé sur l'objet mobile, caractérisé en ce que :
- la face d'entrée du coin de cube est divisée en au moins trois zones colorées distinctes, chaque zone colorée comportant un filtre en transmission spectrale, chaque filtre transmettant uniquement une bande spectrale prédéterminée et différente de celles des autres filtres en transmission spectrale ;
- chaque côté desdites zones colorées comportant un marquage spécifique permettant d'identifier cedit côté ;
- le spectre de la source d'émission ayant au moins une largeur spectrale égale à la somme des bandes spectrales desdits filtres en transmission spectrale ;
- le dispositif fixe électro-optique d'orientation comporte au moins un capteur matriciel couleur sensible dans la bande spectrale de la source d'émission ;
- les moyens d'analyse d'images comportent des moyens de détermination de formes et de caractéristiques géométriques dans les images reçues par le capteur matriciel couleur.

Avantageusement, la face d'entrée du coin de cube étant triangulaire, elle est divisée en trois zones colorées triangulaires identiques.

Avantageusement, la face d'entrée du coin de cube étant triangulaire, elle comporte trois zones colorées triangulaires identiques entourant une zone centrale triangulaire transparente dépourvue de filtre en transmission spectrale.

Avantageusement, les marquages spécifiques sont des marquages géométriques et/ou photométriques.

Avantageusement, dans un premier mode de réalisation, l'ensemble optique comporte quatre coins de cube tétraédriques adjacents et de forme identiques, chaque coin de cube comportant une face d'entrée, deux faces latérales réfléchissantes communes à deux autres coins de cube et une troisième face latérale réfléchissante située dans un plan commun aux autres troisièmes faces latérales des trois autres coins de cube, les dites troisièmes faces latérales formant ainsi un carré, les quatre faces d'entrée et ledit carré formant un pentaèdre en forme de pyramide à base carrée. Dans une variante d'agencement, l'ensemble optique comporte quatre coins de cube tétraédriques de forme identique disposés symétriquement autour d'un unique sommet commun aux quatre coins de cube, chaque coin de cube comportant une face d'entrée. Dans une première variante, les faces d'entrée du premier et du second coin de cube comportent un même premier triplet de zones colorées et les faces d'entrée du troisième et du quatrième coin de cube comportent un même second triplet de zones colorées, différent du premier triplet de zones colorées. Le marquage spécifique des côtés des zones colorées de chaque face d'entrée est agencé de façon à pouvoir distinguer cette face des trois autres. Dans une seconde variante, les faces d'entrée des quatre coins de cube comportent un même premier triplet de zones colorées et les faces d'entrée du premier et du second coin de cube comportent un filtre neutre de transmission prédéterminée.

Avantageusement, dans un second mode de réalisation, l'ensemble optique comporte huit coins de cube tétraédriques adjacents et de forme identiques, chaque coin de cube comportant une face d'entrée, trois faces latérales réfléchissantes communes à trois autres coins de cube, les huit faces d'entrée formant un octaèdre régulier. Dans une première variante, les faces d'entrée des huit coins de cube comportent un même premier triplet de zones colorées et les faces d'entrée de quatre coins de cube comportent un filtre neutre de transmission prédéterminée. Dans une seconde variante, les faces d'entrée du premier, du second, du troisième et du quatrième coin de cube comportent un même premier triplet de zones colorées et les faces d'entrée du cinquième, du sixième, du septième et du huitième coin de cube comportent un même second triplet de zones colorées, différent du premier triplet de zones colorées. Le marquage spécifique des côtés des zones colorées de chaque face d'entrée est agencé de façon à pouvoir distinguer cette face des sept autres.

Avantageusement, dans un troisième mode de réalisation, l'ensemble optique comporte une pluralité de coins de cube dont les faces d'entrée sont orientées et positionnées selon les faces pentagonales d'un dodécaèdre régulier ou une partie d'un dodécaèdre et orientées dans chaque face pentagonale de façon que l'ensemble optique produise, dans une plage d'orientation déterminée, un reflet sur le détecteur, le marquage spécifique des côtés des zones colorées de chaque face d'entrée étant agencé de façon à pouvoir distinguer cette face d'entrée de toutes les autres.

Avantageusement, le dispositif fixe électro-optique comporte au moins une source d'émission ponctuelle et uniquement des composants optiques ayant une puissance optique nulle ou quasi-nulle, c'est-à-dire des miroirs plans ou des lames planes semi-réfléchissantes, la séparation entre la source d'émission ponctuelle et la lumière réfléchie par le ou les coins de cube étant réalisée au moyen d'une lame plane semi-réfléchissante.

Avantageusement, les moyens d'analyse comportent un prétraitement électronique disposé à la sortie des capteurs matriciels et permettant d'attribuer à chaque pixel un code à trois composantes, chaque composante étant représentative d'une bande spectrale prédéterminée, chaque composante étant codé sur un nombre limité de niveaux représentatif de l'absence ou de la présence de lumière reçue dans la dite bande spectrale.

L'invention concerne également un casque de pilote comportant au moins un coin de cube optique dont la face d'entrée est divisée en au moins trois zones colorées distinctes, chaque zone colorée comportant un filtre en transmission spectrale, chaque filtre transmettant uniquement une bande spectrale prédéterminée et différente de celles des autres filtres en transmission spectrale, chaque côté desdites zones colorées comportant un marquage spécifique permettant d'identifier ce dit côté, ledit coin de cube destiné à fonctionner dans un système de détection de la posture d'un objet mobile comme défini précédemment.

Avantageusement, dans une première variante, le casque comporte au moins un dodécaèdre régulier comportant une pluralité de faces identiques et pentagonales comportant chacune un coin de cube agencé de façon que la face d'entrée dudit coin de cube soit située sur une desdites faces pentagonales, chaque face d'entrée étant orientée dans chaque face pentagonale de façon que l'ensemble optique produise, dans une plage d'orientation déterminée, un reflet sur le détecteur, le marquage spécifique des côtés des zones colorées de chaque face d'entrée étant agencé de façon à pouvoir distinguer cette face d'entrée de toutes les autres.

Avantageusement, dans une seconde variante, le casque comporte au moins deux demi-dodécaèdres réguliers identiques comportant chacun six faces identiques et pentagonales comportant chacune un coin de cube agencé de façon que la face d'entrée dudit coin de cube soit située sur une desdites faces pentagonales, chaque face d'entrée étant orientée dans chaque face pentagonale de façon que l'ensemble optique produise, dans une plage d'orientation déterminée, un reflet sur le détecteur, le marquage spécifique des côtés des zones colorées de chaque face d'entrée étant agencé de façon à pouvoir distinguer cette face d'entrée de toutes les autres.

L'invention sera mieux comprise et d'autres avantages apparaîtront à la lecture de la description qui va suivre donnée à titre non limitatif et grâce aux figures annexées parmi lesquelles :
La figure 1 illustre le problème de la limitation angulaire dans un coin de cube ;
Les figures 2, 3 et 4 représentent différentes possibilités de masques géométriques disposées sur la face avant d'un coin de cube selon l'art antérieur ;
La figure 5 représente un synoptique de l'ensemble de détection de posture optique selon l'invention ;
La figure 6 représente un premier coin de cube à face d'entrée polychrome selon l'invention ;
Les figures 7 à 14 représentent, en fonction de la position du point T, intersection sur le plan de la face d'entrée avec la droite reliant la source ponctuelle à l'infini et le sommet du réflecteur, la géométrie des figures rétro-réfléchies par ce premier coin de cube et leurs couleurs ;
La figure 15 représente une première forme géométrique du marquage des côtés des triangles colorés composant la face d'entrée d'un coin de cube ;
La figure 16 représente un second coin de cube à face d'entrée polychrome selon l'invention ;
Les figures 17 à 19 représentent, en fonction de la position du point T, intersection sur le plan de la face d'entrée avec la droite reliant la source ponctuelle à l'infini et le sommet du réflecteur, la géométrie des figures rétro-réfléchies par ce second coin de cube et leurs couleurs ;
La figure 20 représente une vue en perspective d'un assemblage pyramidal de quatre coins de cube selon l'art antérieur ;
Les figures 21 et 22 représentent une vue de dessus et une vue en perspective d'un assemblage de quatre coins de cube selon l'invention ;
Les figures 23 et 24 représentent deux variantes du marquage des côtés des triangles colorés composant la face d'entrée des coins de cube de l'assemblage pyramidal précédent ;
Les figures 25 et 26 représentent une vue de dessus et une vue en perspective d'une variante de l'assemblage de quatre coins de cube des figures 21 et 22 ;
La figure 27 représente un schéma électrique d'une partie des moyens d'analyse d'image d'un dispositif de détection selon l'invention ;
La figure 28 représente une répartition possible des zones colorées des faces d'entrée des quatre coins de cube de l'assemblage pyramidal précédent ;
Les figures 29 et 30 représentent une vue en perspective et une vue éclatée d'un assemblage de huit coins de cube selon l'invention en forme d'octaèdre ;
La figure 31 représente une vue en perspective d'un assemblage de douze coins de cube selon l'invention en forme de dodécaèdre ;
La figure 32 représente une vue en perspective d'un assemblage de six coins de cube selon l'invention en forme de demi-dodécaèdre ;
Les figures 33 et 34 représentent des vues de dos et de dessus d'un casque comportant des assemblages de coins de cube polychromes selon l'invention.

Dans ce qui suit, on traite dans une première partie d'un système de détection optique selon l'invention comportant un unique coin de cube réfléchissant. Une seconde partie traite d'un système de détection comportant un ensemble optique comprenant plusieurs coins de cube associés.

### Première partie : Système de détection à coin de cube unique

Le système de détection optique de la posture d'un objet mobile dans l'espace selon l'invention comprend un dispositif fixe électro-optique d'orientation connue, des moyens d'analyse d'images et un ensemble optique comprenant au moins un coin de cube optique polychrome disposé sur l'objet mobile. Le coeur du dispositif est le coin de cube polychrome. Ce coin de cube peut fonctionner avec différents dispositifs électro-optiques. On citera notamment des dispositifs comportant des sources de lumière blanche d'émission et des caméras couleurs de réception. Cependant, il est particulièrement bien adapté à un dispositif électro-optique à source blanche ponctuelle.

Un exemple de ce type de dispositif est représenté sur la figure 5. Le dispositif électro-optique DEO comporte une source ponctuelle S à spectre étendu dite source « blanche », deux miroirs semi-transparents m et m' et deux capteurs matriciels couleur d'image CM1 et CM2. L'image du capteur CM1 par réflexion sur la lame semi-réfléchissante m' est décalée du capteur CM2. La source ponctuelle S éclaire un coin de cube coloré CCC. La figure colorée réémise par le coin de cube est reçue par les deux capteurs matriciels CM1 et CM2. Ainsi, le point d'impact T sur la face d'entrée du coin de cube donne deux points images T'1 et T'2. La comparaison et l'analyse de ces deux figures qui sont des vues en perspective des images des faces d'entrée des coins de cube obtenues par réflexion sur les miroirs plans constituant le coin de cube permet de retrouver à la fois l'orientation et la position du coin de cube.

Dans la suite de la description, on appellera indifféremment le composant CCC coin de cube ou réflecteur. Ce coin de cube est solidaire de l'objet mobile. Dans les applications aéronautiques, l'objet mobile est un casque. Le coin de cube peut être un réflecteur massif, la réflexion sur les faces internes du coin de cube se fait alors par réflexion totale. Il peut être également constitué par l'assemblage de trois miroirs plans disposés orthogonalement les uns aux autres. Dans la suite de la description, si cela n'est pas précisé, les coins de cube peuvent être indifféremment massifs ou non.

Le dispositif selon l'invention peut également fonctionner avec des dispositifs électro-optiques ne comportant qu'un seul et unique capteur matriciel.

La face d'entrée du coin de cube CCC est divisée en au moins trois zones colorées distinctes, chaque zone colorée comportant un filtre en transmission spectrale. A titre d'exemple, une face d'entrée selon l'invention est représentée en figure 6. Les différentes couleurs sont représentées par des pointillés de densité différente.

Dans ce qui suit, on a adopté les conventions de colorimétrie suivantes. Le spectre visible est divisé en trois grandes bandes spectrales appelées « rouge », « verte » et « bleue » en partant des plus petites longueur d'onde pour aller vers les plus grandes. Un filtre coloré rouge ne transmet donc que la bande spectrale rouge et filtre les bandes spectrales verte et bleue. Les couleurs complémentaires appelées « magenta », « cyan » et « jaune » ont comme bandes spectrales respectives :
- bande magenta : somme des bandes rouge et bleue ;
- bande cyan : somme des bandes verte et bleue ;
- bande jaune : somme des bandes rouge et verte.

Le positionnement spectral et la largeur des bandes est, bien entendu, adapté en fonction de la sensibilité spectrale des capteurs matriciels. Il est possible d'adapter le système de détection à un fonctionnement dans d'autres répartitions spectrales comme le proche infrarouge. Il suffit de conserver les trois bandes spectrales différentes et d'adapter les filtres et la sensibilité du capteur en conséquence.

L'analyse des images colorées issues des capteurs matriciels et en particulier de leurs lignes de fuite permet de retrouver la position et l'orientation du coin de cube CCC.

Comme il a été dit, la spécificité du coin de cube selon l'invention est qu'il comporte une face avant polychrome. Il existe différents agencements des zones colorées de cette face avant. Dans une première réalisation illustrée sur les figures 6 à 14, la face d'entrée PQR du coin de cube est triangulaire et comporte trois zones colorées triangulaires identiques entourant une zone centrale triangulaire transparente dépourvue de filtre en transmission spectrale. Plus précisément, la surface transparente de la face d'entrée du coin de cube délimitée par le triangle PRQ comporte :
- un filtre rouge, c'est-à-dire transparent aux longueurs d'onde rouges uniquement sur la surface limitée par le triangle PAC ;
- un filtre vert, c'est-à-dire transparent aux longueurs d'onde vertes uniquement sur la surface limitée par le triangle RAB ;
- un filtre bleu, c'est-à-dire transparent aux longueurs d'onde bleues uniquement sur la surface limitée par le triangle BQC ;
- aucun filtre sur la surface limitée par le triangle ABC qui est donc totalement transparente.

Avec cette disposition de la face d'entrée, on obtient l'effet suivant :
- la partie rouge du rayonnement issu de la source S ne pénètre et ne ressort du réflecteur que par l'intérieur du losange PABC ;
- la partie verte du rayonnement issu de la source S ne pénètre et ne ressort du réflecteur que par l'intérieur du losange RACB ;
- la partie bleue du rayonnement issu de la source ne pénètre et ne ressort du réflecteur que par l'intérieur du losange QCAB.

Dans l'image projetée sur chaque capteur, on récupère donc uniquement des surfaces de couleur homogène, rouges, vertes, bleues ou blanches, ces surfaces ne sont pas mélangées et ne comportent pas de couleur composée obtenue par superposition. Ces surfaces sont adjacentes et ne comportent pas de zones noires intermédiaires. Dans la suite de la description, on appelle surface « à dominante couleur », la surface résultant de la juxtaposition d'une surface de couleur pure, soit rouge, soit verte, soit bleue et d'une surface blanche. On obtient donc des surfaces à « dominante rouge », à « dominante verte » ou à « dominante bleue ». Au niveau des pixels des capteurs, ces surfaces « à dominante couleur » sont caractérisées comme suit :
- A l'intérieur de la surface à dominante rouge, tous les pixels reproduisant la couleur rouge sont allumés ;
- A l'intérieur de la surface à dominante verte, tous les pixels reproduisant la couleur verte sont allumés ;
- A l'intérieur de la surface à dominante bleue, tous les pixels reproduisant la couleur bleue sont allumés ;
- A l'extérieur de la surface à dominante rouge, aucun pixel reproduisant la couleur rouge n'est allumé ;
- A l'extérieur de la surface à dominante verte, aucun pixel reproduisant la couleur verte n'est allumé ;
- A l'extérieur de la surface à dominante bleue, aucun pixel reproduisant la couleur bleue n'est allumé.

Le contour de chacune de ces trois surfaces à dominante couleur est un parallélogramme si la source est à l'infini, ou un quadrilatère dans le cas général d'une source à distance finie. Chaque surface est produite par :
- occultation du rayonnement incident par l'extérieur d'une surface de contour en parallélogramme ;
- puis, occultation du rayonnement par le symétrique de cette surface par rapport au sommet O du réflecteur en coin de cube ;
- puis, projection vers la source sur les capteurs d'analyse.

Plus précisément,
- le quadrilatère délimitant la surface à dominante rouge est le produit de l'opération d'occultation/projection du losange PABC et de son symétrique ;
- le quadrilatère délimitant la surface à dominante verte est le produit de l'opération d'occultation/projection du losange RACB et de son symétrique ;
- le quadrilatère délimitant la surface à dominante bleue est le produit de l'opération d'occultation/projection du losange QCAB et de son symétrique.

La forme du contour et la couleur des surfaces obtenues sur les capteurs sont fonction de l'incidence du rayonnement sur le réflecteur produit par la source S, plus précisément fonction de la position du point T, intersection sur le plan PQR de la droite OS reliant la source S et le sommet O du réflecteur. L'image sur le détecteur ne contient du rouge, par exemple, que si et seulement si, le point T est à l'intérieur du losange ABCP.

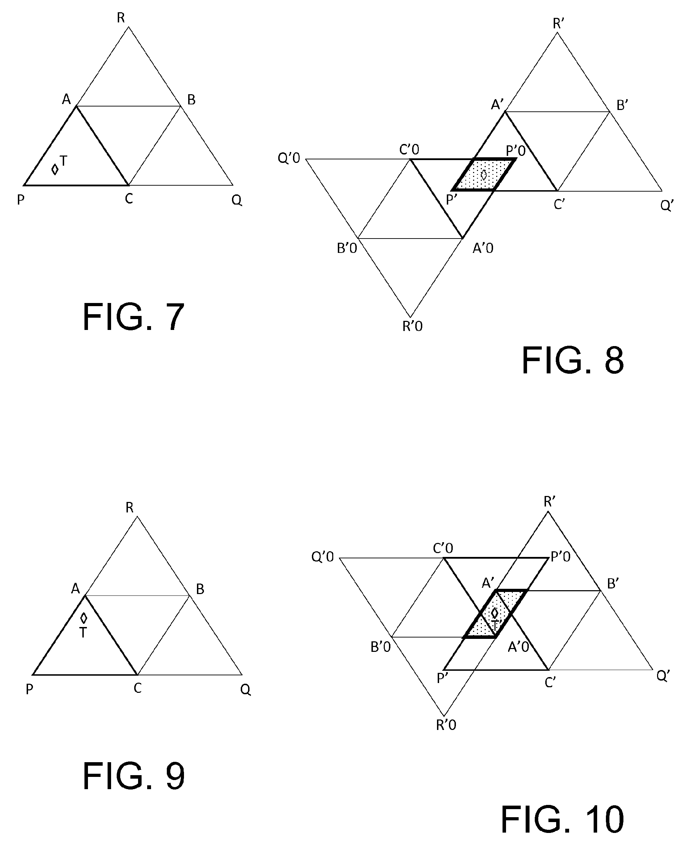

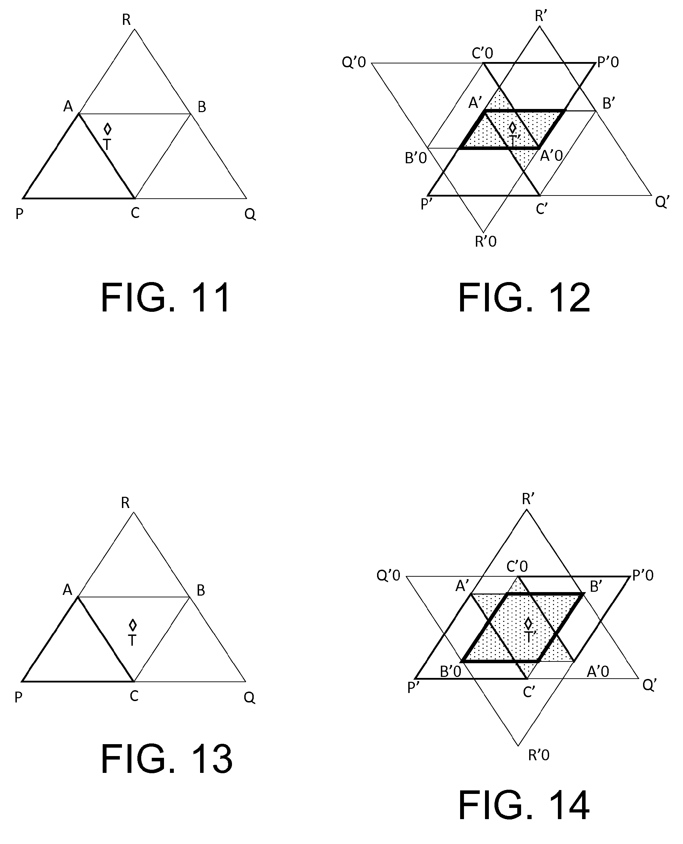

A titre d'exemples, les figures 7 à 14 décrivent les différentes images obtenues selon la position de T dans le losange rouge ABCP. Bien entendu, le même raisonnement s'applique aux deux autres zones colorées vertes et bleues. Les figures 7, 9, 11 et 13 indiquent la position de T dans le losange ABCP qui sont :
- en figure 7, le point T est dans le triangle à transmission rouge PAC et proche du sommet P ;
- en figure 9, le point T est dans le triangle à transmission rouge PAC et proche du sommet A ;
- en figure 11, le point T est dans le triangle ABC de transmission unité et proche du sommet A ;
- en figure 13, le point T est dans le triangle ABC de transmission unité et proche du centre.

Les figures 8, 10, 12 et 14 donnent les images correspondantes obtenues sur les détecteurs, la source S étant à l'infini. Pour ces figures, on a adopté la représentation suivante :
- Les points P', A', B', C' et T' sont les projections cavalières dans la direction OS des points P, A, B, C et T sur le plan du détecteur ;
- Les points P'0, A'0, B'0 et C'0 sont les projections des points, non représentés sur les figures, P0, A0, B0 et C0 qui sont les images virtuelles des points P, A, B et C produites par le réflecteur de sommet O. Ces points P0, A0, B0 et C0 sont symétriques par rapport à O des points P, A, B et C ;
- Les parallélismes sont conservés et les points P'0, A'0, B'0, C'0 sont les symétriques par rapport à T' des points P', A', B', C'.

Sur les figures 8, 10, 12 et 14, la zone en pointillés correspond à la partie lumineuse de la zone d'intersection des triangles P'Q'R' et P'0Q'0R'0. La zone en traits gras donne le contour de la surface à dominante rouge, présente dans les quatre images. Le contour de cette surface contient toujours l'image d'un des sommets, à savoir P' en figure 8, A' en figures 10 et 12 et B' en figure 14. Par conséquent, ce contour contient toujours l'image des deux côtés concurrents sur ce sommet. Cette surface à dominante rouge est un parallélogramme, dont la direction d'un des côtés et la position de l'intersection des diagonales donne l'orientation du coin de cube. Dans le cas d'une source S à distance finie, cette surface est un quadrilatère dont les points de concours des côtés pris deux à deux sont les deux points de fuite des directions AP et AB inconnues, pour la projection de centre S0 inconnu symétrique de la source S par rapport au sommet O également inconnu.

En réalisant la projection dans les deux plans des capteurs CM1 et CM2 des images réfléchies par le coin de cube, ces plans étant différents et de positions et d'orientations connues, on obtient deux quadrilatères différents. De la connaissance de la position sur chaque capteur des deux points de fuite d'un même losange projeté, on déduit la position du sommet O du réflecteur et l'orientation de deux des côtés adjacents du losange initial correspondant. On obtient ainsi l'orientation et la position de l'objet mobile.

Tant que l'orientation du réflecteur est telle que l'intersection T entre la droite SO reliant la source S au sommet O du réflecteur et le plan PQR reste à l'intérieur du triangle PQR, il existe au moins un quadrilatère imagé sur les détecteurs. Ce quadrilatère est :
- à dominante rouge, si T est dans le losange PABC,
- à dominante verte, si T est dans le losange RABC,
- à dominante bleue, si T est dans le losange QABC.

Cette disposition permet une augmentation notable du champ angulaire de détection dans la mesure où la totalité de la surface d'entrée du coin de cube est maintenant prise en compte dans la détection et non plus un masque partiel. Pour un coin de cube selon l'invention, le champ angulaire total obtenu vaut π/2 stéradian.

Si la source ponctuelle n'est pas à l'infini, les parallélogrammes des surfaces à dominante colorée se déforment en quadrilatères. Le point T' reste le point de concours commun aux segments P'0P', A'0A', B'0B', C'0C', mais sans en être le centre.

La même méthode de filtrage est, moyennant des ajustements simples, applicable, avec les mêmes capteurs d'image mosaïque, en utilisant un réflecteur pourvu de filtres moins spectralement sélectifs. Ainsi, on peut utiliser, par exemple, des filtres à dominante jaune, cyan et magenta. Les quadrilatères projetés sont également à dominante jaune, cyan ou magenta.

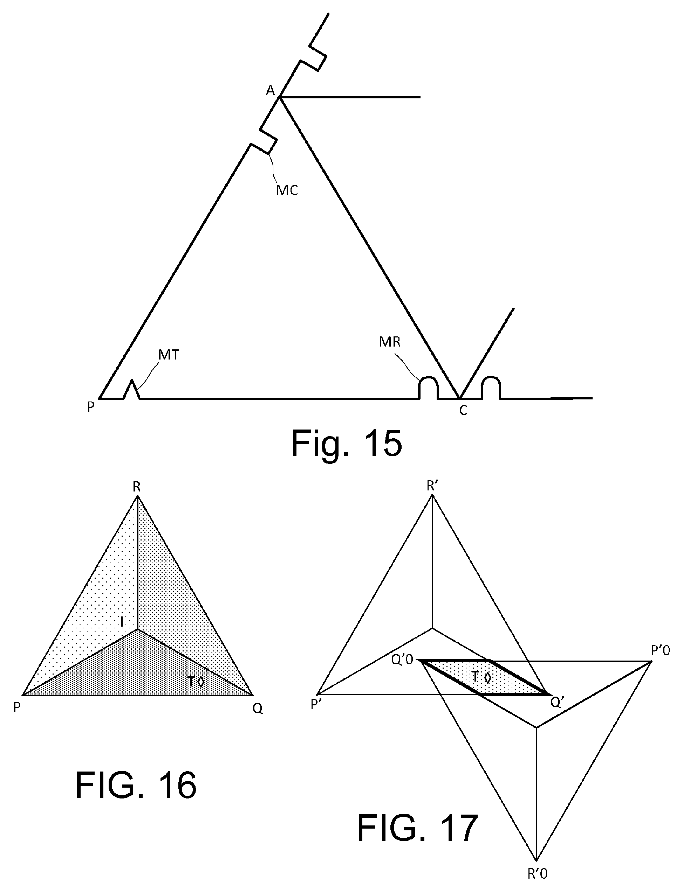

Si on utilise de simples triangles colorés, il est difficile de déterminer les côtés du triangle concernés par la mesure. Pour discriminer les côtés, on leur ajoute un marquage spécifique à proximité de chaque sommet des triangles PAC, RAB et QBC. On identifie ainsi, sur le contour de l'image projetée d'une couleur dominante donnée, le sommet originel et un des deux côtés concourants sur ce sommet. On peut utiliser différents types de marquage géométrique, photométrique ou colorimétrique. A titre d'exemple, on peut pratiquer des petites obturations locales de forme différente. La figure 15 représente ce type de marquage réalisé sur le triangle APC. Les marques sont les suivantes :
- Marque MT de forme triangulaire à proximité du sommet P sur le côté PC ;
- Marque MC de forme carrée à proximité du sommet A sur le côté AP ;
- Marque MR de forme demi-circulaire à proximité du sommet C sur le côté CP.

Le même marquage que celui du triangle APC est pratiqué pour les deux autres triangles RAB et BCQ respectivement vert et bleu.

Pour les images projetées ne présentant pas de marquage, comme le dodécagone lumineux de la figure 14, la discrimination des sommets originels s'opère à l'aide de la couleur particulière produite à proximité de chaque sommet à angle aigu de ce dodécagone, à savoir les sommets A', B' C', A'0, B'0, C'0.

Dans une seconde réalisation illustrée sur les figures 16 à 19, la face d'entrée PQR du coin de cube est triangulaire et comporte uniquement trois zones colorées triangulaires identiques. A titre d'exemple illustré en figure 16, les trois zones comportent des filtres cyan, magenta et jaune de forme triangulaire sur la face avant PQR de centre I. Là encore, les différentes couleurs sont représentées par des densités de pointillés différentes.

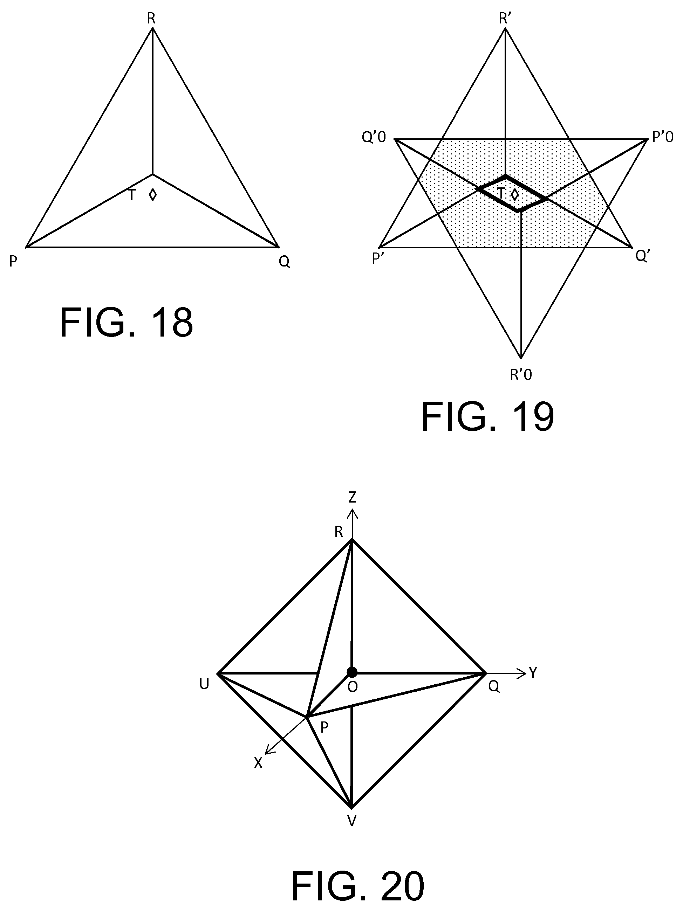

Selon la position du point T défini comme précédemment et positionné, par exemple, à l'intérieur du triangle magenta PIQ, la surface lumineuse obtenue sur le détecteur, pour une source S à l'infini varie. Elle est représentée sur les figures 17 et 19 en pointillés, pour deux positions du point T représentées en figures 16 et 18. Les parallélogrammes entourés d'un contour gras indiquent la limite de la zone magenta.

Pour la première position de T voisin du point Q, la surface représentée sur la figure 17 est un parallélogramme bicolore rouge/magenta dont la première direction commune aux limites rouge/noir et magenta/noir est parallèle au côté PQ, limite magenta/noir du triangle magenta PIQ, la seconde direction de la limite rouge/noir est parallèle au côté RQ, limite jaune/noir du triangle jaune RIQ.

Pour la seconde position de T voisin du point I, la surface représentée sur la figure 19 est un hexagone quadricolore magenta, rouge, vert et bleu dont la première direction commune aux limites rouge/noir et bleu /noir est parallèle au côté PQ, limite magenta/noir du triangle magenta PIQ, la seconde direction commune aux limites rouge/noir et vert /noir est parallèle au côté RQ, limite jaune/noir du triangle cyan QIR.

### Seconde partie : Système de détection comportant plusieurs coins de cube

Même si un système à détection optique comportant un unique coin de cube coloré selon l'invention a un champ angulaire supérieur à celui d'un système comportant un coin de cube à masque à contour en parallélogramme, il peut être insuffisant dans un certain nombre d'applications nécessitant un grand débattement angulaire. C'est le cas notamment des systèmes de détection de posture de casque. La façon la plus simple de faire est de disposer sur l'objet mobile un ensemble optique comportant plusieurs coins de cube agencés de façon à couvrir un large secteur angulaire. Cette disposition présente également l'avantage que le système peut fonctionner, sous certaines conditions, avec un seul dispositif d'émission et de réception.

L'association de plusieurs coins de cube est connue. Ainsi, le brevet US 6 123 427 intitulé « Arrangement for retroreflection of a ray using triple prisms » décrit plusieurs combinaisons optiques comportant de six à dix réflecteurs. Le brevet US 3 039 093 intitulé « Reflective radar target » décrit un arrangement comportant vingt réflecteurs. Enfin, le brevet FR 2 433 760 intitulé « Dispositif optoélectronique de détection et de localisation d'objet et système de repérage spatial de direction comportant un tel dispositif » décrit, pour des applications situées dans le même domaine technique que celui de l'invention, une association de quatre coins de cube adjacents selon deux de leurs faces réfléchissantes de façon à élargir le champ angulaire. La figure 20 représente une vue en perspective de cette association à quatre coins de cube dans un trièdre trirectangle (O, X, Y, Z).

Cependant, ces diverses combinaisons présentent plusieurs inconvénients importants pour notre application qui sont détaillés ci-dessous :
- Les coins de cube décrits dans l'art antérieur sont tous identiques. La discrimination des reflets des coins de cube entre eux n'est donc pas décrite ;
- Dans le cas d'un réflecteur constitué de trois miroirs orthogonaux tel que représenté en figure 20, par opposition au cas du réflecteur massif avec trois faces en réfection interne totale, lorsque la source est positionnée sur un des deux plans XOY et XOZ communs à deux réflecteurs, aucun rayonnement n'est réfléchi vers le détecteur ;
- La discrimination particulière des reflets n'est pas non plus décrite lorsque la source est positionnée sur un des deux plans de séparation des réflecteurs comme XOY et XOZ.

Les combinaisons de coins de cube décrites ci-dessous comportent toutes des coins de cube dont la face d'entrée triangulaire comporte trois zones colorées triangulaires identiques entourant une zone centrale triangulaire transparente. Un exemple de ce type de face d'entrée est représentée en figure 6. Bien entendu, au prix d'adaptations à la portée de l'homme du métier, il est possible de réaliser des combinaisons de coins de cube dont la face d'entrée triangulaire comporte uniquement trois zones colorées triangulaires identiques. Un exemple de ce type de face d'entrée est représentée en figure 16.

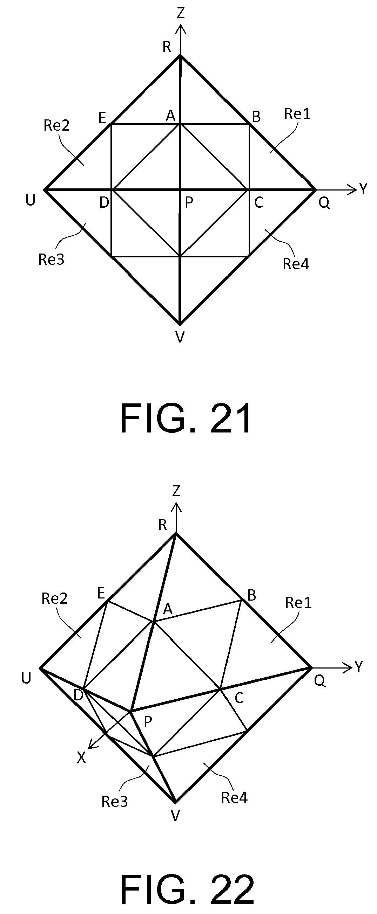

Une première combinaison de coins de cube intéressante consiste à associer quatre coins de cube adjacents notés Re1, Re2, Re3 et Re4 tels que décrits sur les figures 21 et 22. La figure 21 représente une vue de dessus, selon OX, de l'ensemble optique à quatre coins de cube et la figure 22 représente une vue en perspective du même ensemble optique. Dans cet arrangement, les quatre faces d'entrée et le plan ZOY commun à une face latérale de chaque réflecteur forment un pentaèdre PRQUV, c'est-à-dire une pyramide à base carrée. La face RUVQ est un carré, les faces d'entrée PQR, PUR, PUV et PVQ sont des triangles équilatéraux. Chaque réflecteur en coin de cube est pourvu de trois filtres colorés triangulaires à marquage et d'un filtre neutre comme précédemment décrit. Les filtres des coins de cube Re1 et Re2 sont délimités par les points A, B, C, D et E sur les figures 21 et 22.

Il est nécessaire de discriminer les réflecteurs entre eux. Une première discrimination possible est obtenue en combinant des coins de cube à filtres polychromes différents. Ainsi, à titre d'exemple, les réflecteurs Re1 et Re3 sont équipés de filtres triangulaires rouge, vert et bleu et d'un triangle central neutre. Les réflecteurs Re2 et Re4 sont équipés de filtres triangulaires cyan, magenta, et jaune et d'un triangle central neutre.

Les reflets générés par les coins de cube Re1 et Re3 se distinguent de ceux de des coins de cube Re2 et Re4 par l'absence dans l'image projetée des trois couleurs cyan, magenta et jaune. Les reflets générés par Re2 et Re4 se distinguent de ceux de Re1 et Re3 par la présence dans l'image projetée d'au moins une des trois couleurs cyan, magenta ou jaune.

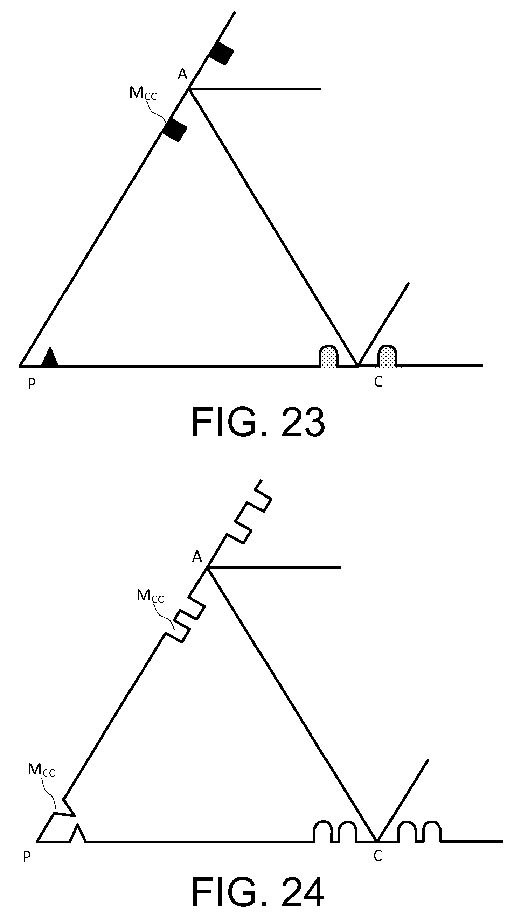

Pour identifier, sur le reflet isolé d'une couleur donnée, le réflecteur source, c'est à dire pour choisir entre les deux coins de cube Re1 et Re3 ou entre les coins de cube Re2 et Re4, on ajoute une différenciation supplémentaire sur les marquages des faces des coins de cube. A titre d'exemples, cette différenciation supplémentaire est obtenue :
- Comme représenté en figure 23, par des niveaux de transmission intermédiaire dans les marques M_{CC}. La transmission optique de la marque ajoutée sur le filtre coloré au bord de son contour a donc deux valeurs prédéterminées. Sur la figure 23, les marques de transmission faible sont représentées en noir ;
- Comme représenté en figure 24, par un doublement du marquage.

Pour les images projetées ne contenant pas de marquage, la différenciation s'opère par le sens de l'enchainement des couleurs entourant la surface transparente blanche. Ainsi, sur l'image fournie par Re1, la séquence rouge, vert, bleu entourant la surface transparente suit le sens trigonométrique, alors qu'elle suit le sens trigonométrique inverse pour Re3. Sur l'image fournie par Re2, la séquence magenta-jaune-cyan entourant la surface blanche suit le sens trigonométrique, alors qu'elle suit le sens trigonométrique inverse pour Re4.

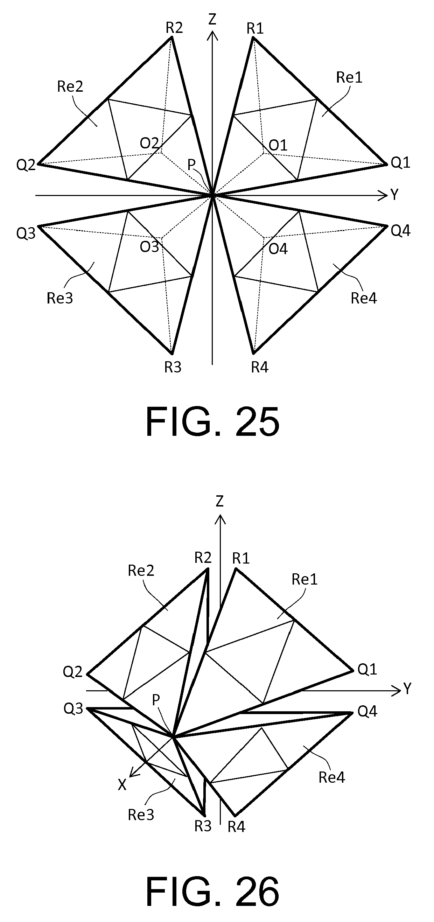

Pour un réflecteur donné, l'existence d'un reflet est assurée tant qu'il existe un rayon sommet/source SO intérieur au trièdre formé par ses trois faces réfléchissantes. Pour assurer d'une part l'existence et d'autre part une dimension minimale au reflet lorsque la source est au voisinage d'un des deux plans XOY ou XOZ, on modifie la configuration des quatre coins de cube. Par rapport à la disposition des figures 21 et 22, chacun parmi au moins deux, mais préférentiellement parmi les quatre coins de cube subit individuellement une rotation de quelques degrés et une translation selon les axes OY et OZ, qui l'éloigne de ces deux voisins et permet ainsi la rotation des réflecteurs. A titre d'exemple, la figure 25 représente une vue de dessus de l'ensemble optique à quatre coins de cube modifié et la figure 26 représente une vue en perspective du même ensemble optique modifié. Les quatre réflecteurs Re1, Re2, Re3 et Re4 sont définis respectivement par les quadruplets de points (O1, Q1, R1, P), (O2, Q2, R2, P), (O3, Q3, R3, P) et (O4, Q4, R4, P). Ils sont tous identiques, ils ont tous un même sommet commun P et sont symétriques par rapport aux axes OY et OZ.

Dans ce cas, la source S doit être positionnée à une distance minimale xmin des réflecteurs pour assurer une continuité de couverture angulaire d'un réflecteur à l'autre. On peut démontrer que :
xmin = e/[2tg(α/2)] e étant la distance maximale séparant deux sommets de deux coins de cubes adjacents et α étant l'angle d'inclinaison existant entre les deux faces adjacentes de ces deux coins de cube.

Lorsque la source S est au voisinage d'un des deux plans XOZ ou XOY, et seulement dans ce cas-là, les deux réflecteurs adjacents génèrent chacun une image sur le détecteur, ces deux images se superposent donc partiellement. Là ou il y a superposition, les puissances lumineuses projetées sur les capteurs s'additionnent. Par conséquent et dans ce cas particulier, le traitement des images issues des capteurs doit être capable non seulement de reconnaître les couleurs des plages colorées contenues dans les images captées mais également leur niveau d'amplitude. La façon la plus simple de faire est de disposer sur certains coins de cube un filtre neutre d'atténuation connue. Par exemple, si on choisit d'atténuer dans un rapport deux les niveaux lumineux réfléchis par les coins de cube Re2 et Re4 par rapport à ceux des coins de cube Re1 et Re3, on ajoute sur les faces d'entrée des coins de cube Re2 et Re4 un filtre global de transmission (0,5)^{0,5}.

Le choix et la disposition des couleurs sur l'ensemble des quatre réflecteurs permettent de retrouver à partir d'une image combinée les deux images originelles.

Dans cette configuration, il n'est pas nécessaire de déterminer précisément les niveaux de luminance dans les images captées, mais, les niveaux relatifs d'amplitude des différentes plages colorées entre elles. Ainsi, on peut attribuer à chaque pixel coloré un code simple à trois chiffres, fonction de seuils prédéterminés.

A titre d'exemple, le premier chiffre est représentatif de la couleur rouge, le second chiffre de la couleur verte et le troisième de la couleur bleue.

Chaque chiffre a au plus cinq valeurs. A titre d'exemple, la valeur 0 signifie que la couleur est totalement absente du pixel. La valeur 1 signifie que la couleur vient d'une et d'une seule plage colorée atténuée. La valeur 2 signifie que la couleur vient d'une et d'une seule plage colorée non atténuée. La valeur 3 signifie que la couleur vient de deux plages, l'une atténuée et l'autre pas et ainsi de suite...

Ainsi, un pixel appartenant à la somme des images de trois réflecteurs ou des quatre réflecteurs a comme code :
- Pour la combinaison des images des réflecteurs Re1, Re2 et Re3, la couleur est 2r+j+2v et le code est 330 ;
- Pour la combinaison des images des réflecteurs Re2, Re3 et Re4, la couleur est j+2v+c et le code est 141 ;
- Pour la combinaison des images des réflecteurs Re3, Re4 et Re1, la couleur est 2r+2v+c et le code est 231 ;
- Pour la combinaison des images des réflecteurs Re4, Re1 et Re2, la couleur est 2r+j+c et le code est 321.
- Pour la combinaison des images des réflecteurs Re1, Re2, Re3 et Re4, la couleur est 2r+j+2v+c et le code est 341.

Les lettres r, j, v et c désignent les couleurs rouge, jaune, verte et cyan des images issues séparément des réflecteurs.

On peut donc, connaissant par mesure, les codes des surfaces de l'image totale, reconstruire, par leur code, les surfaces de chacune des deux à quatre images constituantes, c'est-à-dire :
- les surfaces produites par chaque réflecteur mais qui ne sont pas combinées avec les surfaces d'un autre réflecteur ;
- les surfaces produites par chaque réflecteur et qui sont combinées avec les surfaces d'un ou plusieurs autres réflecteurs ;
- les deux à quatre réflecteurs concernés parmi les quatre.

On en déduit le contour des surfaces de couleurs non combinées produites séparément par les réflecteurs, et donc l'orientation d'au moins un de ces réflecteurs.

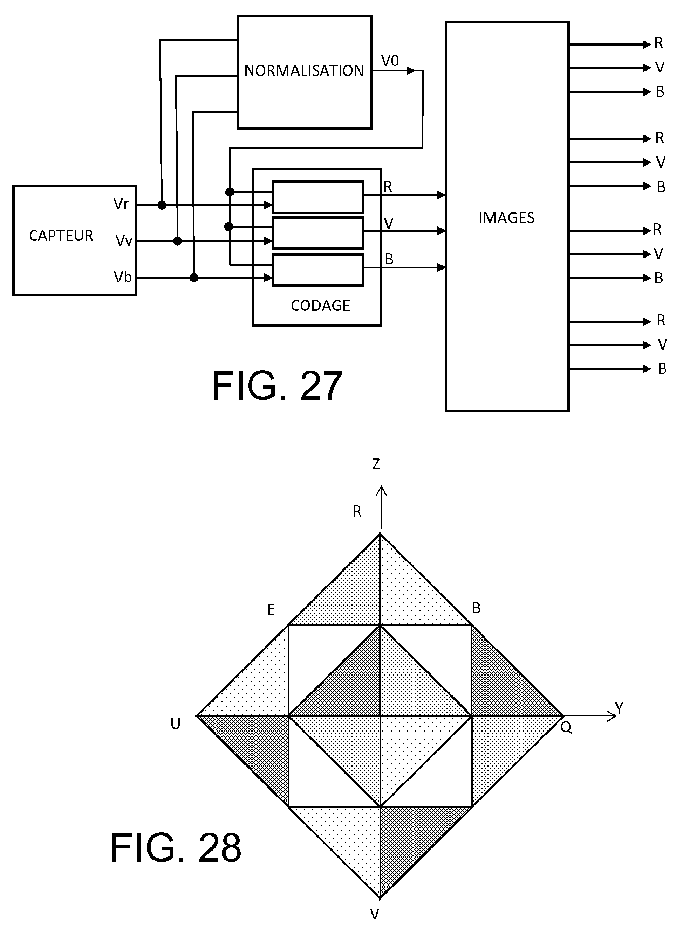

La figure 27 représente un schéma électrique d'une partie des moyens d'analyse d'image d'un dispositif de détection selon l'invention comportant cette disposition. Il comprend plusieurs blocs fonctionnels. Le bloc d'entrée « CAPTEUR» représente le capteur matriciel. Ce bloc fournit, pour chaque pixel du détecteur matriciel, trois signaux vidéo « brut » notés Vr, Vv et Vb. Le second bloc noté « NORMALISATION » représente le bloc de normalisation. A partir des signaux précédents, il détermine le niveau V0 correspondant à un signal non filtré. On peut démontrer que, soit ce signal V0 est présent dans les signaux vidéo, soit on peut le déduire facilement par la connaissance des signaux colorés bruts. Le troisième bloc noté « CODAGE » assure la fonction de codage tel que précédemment décrite à partir des signaux issus du capteur et du bloc de normalisation. Le quatrième bloc noté « IMAGES » détermine la géométrie et la couleur des différentes plages colorées issues des reflets des coins de cube. Au plus, quatre images différentes sont à analyser, chaque point de ces images ayant trois coordonnées normalisées R, V et B.

Cette méthode présente deux avantages importants. D'une part, elle ne met pas en oeuvre une mesure absolue du niveau lumineux, mais est basée sur la variation locale du niveau lumineux sur chaque voie R, V et B, c'est-à-dire qu'elle n'est pas sensible à la variation globale de puissance reçue par le capteur due par exemple à la variation de la puissance de la source ou à la variation de la distance source-réflecteur ou de la distance réflecteur-capteur. D'autre part, la quantification des vidéos couleur sous un nombre réduit de niveaux rend le dispositif peu sensible à la variation colorimétrique de la source.

Une seconde combinaison de coins de cube est une variante de la précédente. L'ensemble optique comporte également quatre coins de cube adjacents notés Re1, Re2, Re3 et Re4 comme décrits sur les figures 21 et 22. Mais, dans cette variante, les réflecteurs Re1 à Re4 sont tous équipés de filtres triangulaires rouge, vert et bleu et d'un triangle central neutre. Les réflecteurs sont disposés de telle sorte que deux surfaces colorées de même couleur ne sont pas adjacentes. La figure 28 représente une répartition possible des zones colorées des faces d'entrée des quatre coins de cube de cet assemblage optique. Comme précédemment, les trois couleurs sont représentées par des pointillés de densité différente.

Pour identifier, sur le reflet isolé d'une couleur donnée, le réflecteur source, les différenciations du marquage précédemment décrites sont toutes utilisées. Ainsi, les marquages ont des formes géométriques différentes permettant d'identifier les côtés des triangles colorés des réflecteurs. Ils sont unitaires ou doublés et à transmission différente pour différentier les réflecteurs entre eux comme déjà décrit sur les figures 23 et 24. En outre, on ajoute un marquage similaire sur les côtés des triangles centraux des faces d'entrée des réflecteurs. Le marquage est effectué à proximité des sommets.

De la même façon que dans le cas précédent, lorsque la source S est au voisinage d'une des arêtes de séparation de deux coins de cube, les deux réflecteurs adjacents génèrent chacun une image sur le détecteur, ces deux images se superposent donc partiellement. La façon la plus simple permettant de déterminer les images issues de chaque coin de cube est de disposer sur certains coins de cube un filtre neutre d'atténuation connue. Par exemple, si on choisit d'atténuer dans un rapport deux les niveaux lumineux réfléchis par les coins de cube Re2 et Re4 par rapport à ceux des coins de cube Re1 et Re3, on ajoute sur les faces d'entrée des coins de cube Re2 et Re4 un filtre global de transmission (0,5)^{0,5}.

En utilisant un codage identique à celui décrit précédemment, on démontre alors que, connaissant par mesure, les codes des surfaces de l'image totale, on peut reconstruire, par leur code, les surfaces de chacune des deux à quatre images constituantes, c'est-à-dire :
- les surfaces produites par chaque réflecteur mais qui ne sont pas combinées avec les surfaces d'un autre réflecteur ;
- les surfaces produites par chaque réflecteur et qui sont combinées avec les surfaces d'un ou plusieurs autres réflecteurs ;
- les deux à quatre réflecteurs concernés parmi les quatre.

On en déduit le contour des surfaces de couleurs non combinées produites séparément par les réflecteurs, et donc l'orientation d'au moins un de ces réflecteurs.

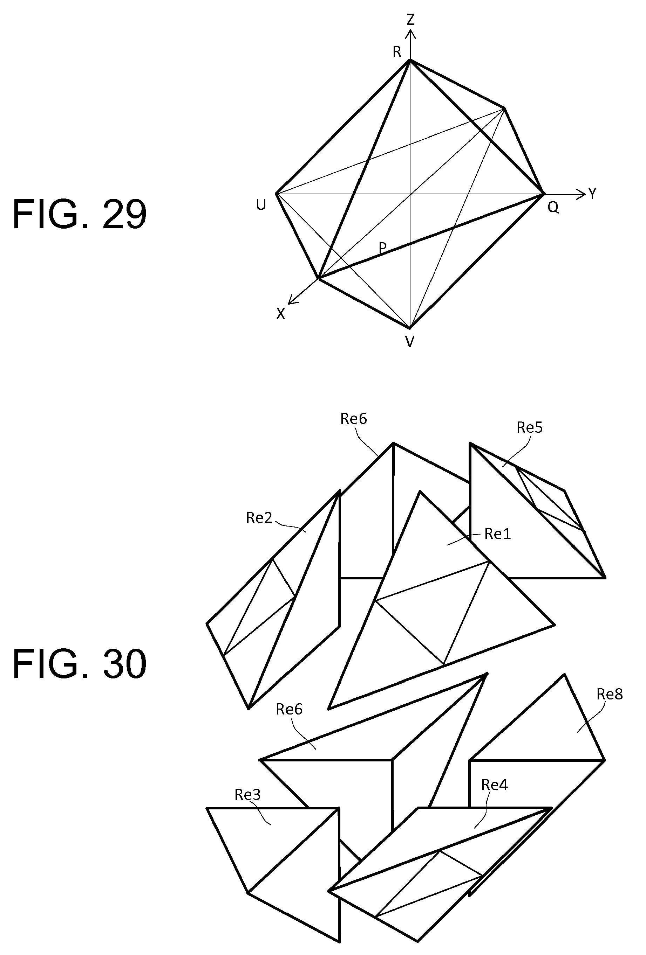

Une troisième combinaison de coins de cube comporte huit coins de cube massifs adjacents en forme de tétraèdres trirectangles de même sommet O et référencés de Re1 à Re8. Les huit faces d'entrée équilatérales, forment un octaèdre convexe régulier PRQUVW. Elle est représentée sur les figures 29 et 30. La figure 29 représente une vue en perspective de l'octaèdre et la figure 30 une vue éclatée montrant les différents coins de cube référencés de Re1 à Re8.

Chaque réflecteur en coin de cube est pourvu de trois filtres colorés triangulaires à marquage et d'un filtre neutre également avec marquage comme précédemment décrit. Comme dans le cas des combinaisons optiques précédentes à quatre coins de cube, il existe deux variantes de l'ensemble optique octaédrique.

Dans une première variante, tous les coins de cube comportent le même triplet de zones colorées qui peuvent être rouge, verte et bleue. Dans une seconde variante, les faces d'entrée de quatre coins de cube comportent un même premier triplet de zones colorées et les faces des quatre autres coins de cube comportent un même second triplet de zones colorées, différent du premier triplet de zones colorées. Il est possible, en répartissant de façon appropriée les couleurs, la forme, la transmission et le nombre des entailles des marques, d'identifier chaque coin de cube par son image sur les capteurs. L'angle solide couvert devient donc 4π stéradians, soit la totalité de l'espace.

Dans une seconde variante, chacun des huit réflecteurs en coin de cube combinés en octaèdre est pourvu des mêmes trois filtres colorés triangulaires à marquage et d'un filtre neutre également avec marquage. On applique un filtre un filtre global de transmission (0,5)^{0,5} sur la face d'entrée de quatre des coins de cube. Lorsque le marquage d'un coin de cube comporte deux entailles, la forme de l'entaille la plus proche du sommet sert toujours à discriminer le côté et le sommet du triangle coloré ou blanc de la face d'entrée. La deuxième entaille peut prend trois formes différentes. Les images obtenues sur le détecteur permettent ainsi de discriminer entre eux les reflets fournis par les réflecteurs.

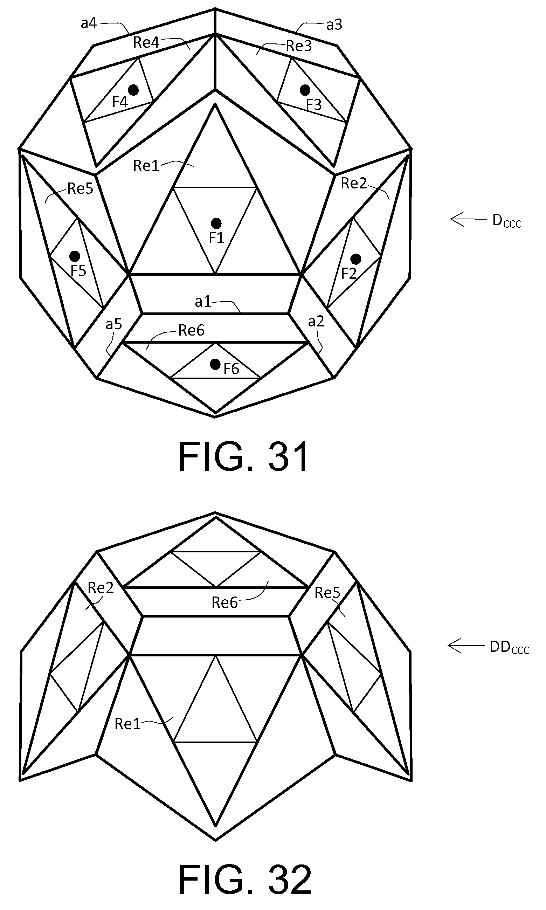

Une quatrième combinaison de coins de cube comporte douze coins de cube notés de Re1 à Re12 non adjacents par leurs faces latérales. Chaque réflecteur en coin de cube est pourvu en face avant de trois filtres colorés triangulaires à marquage et d'un filtre neutre également avec marquage, comme précédemment décrit. Les douze réflecteurs de sommets 01 à 012 en forme de pyramides triangulaires sont positionnés et orientés par rapport à un dodécaèdre convexe régulier de taille quelconque comme on le voit sur la figure 31 qui représente une vue de face de cet ensemble optique D_{CCC}. On appelle O le centre du dodécaèdre et F1 à F12 les centres de chacune de ses douze faces pentagonales. Ces douze faces délimitent douze secteurs angulaires adjacents de sommet O qui correspondent à des pyramides pentagonales et d'angle solide individuel Ωd égal à π/3 stéradian. Sur la figure 31, seuls les coins de cube Re1 à Re6 sont visibles.

L'agencement des réflecteurs a les caractéristiques et les propriétés suivantes :
- L'axe de chaque réflecteur Rei qui correspond à la diagonale du coin de cube de sommet Oi est confondu avec un des axes OFi du dodécaèdre, l'angle entre deux axes voisins est donc voisin de 62° ;
- Chaque réflecteur Rei est orienté autour de son axe de façon que son champ angulaire, d'angle solide Ωr égal à π/2 sr, contienne la quasi totalité du secteur angulaire de la pyramide pentagonale d'angle solide Ωd correspondant au un douzième du dodécaèdre. Le défaut de couverture angulaire situé en partie de la périphérie du champ de chaque réflecteur, est compensé par le ou les réflecteurs voisins. Par conséquent, le dodécaèdre couvrant, pas construction, l'angle solide de 4π stéradians continus, l'ensemble des douze réflecteurs en coin de cube couvre également 4π stéradians de façon continue ;
- Le champ angulaire périphérique de chaque réflecteur est localement commun avec le champ angulaire périphérique d'au moins un des réflecteurs voisins. Par conséquent, en périphérie d'un réflecteur, on recueille le reflet périphérique d'au moins deux réflecteurs, notamment pour les réflecteurs à miroirs, assurant ainsi une taille minimum au reflet, comme requis plus haut ;
- Les sommets Oi des réflecteurs, de hauteur donnée h correspondant à la demi-diagonale du cube, sont positionnés sur les axes OFi à la même distance OOi, cette distance est telle que le volume de chaque réflecteur est intégralement contenu à l'intérieur de la pyramide pentagonale associée de sommet O, de façon à assurer une séparation physique entre les réflecteurs. Les conséquences géométriques sont les suivantes :
- Les douze sommets Oi sont sur une sphère de centre O ;
- Les douze faces avant des réflecteurs sont tangents en leur milieu à une sphère de centre O ;
- Le rayon d égal à OOi de la première sphère vaut au minimum dmin qui est approximativement égal à 1,23 h ;
- La distance e égale à OiOj entre deux sommets voisins a pour valeur minimum emin qui est approximativement égal à 0,65 h ;
- Le champ angulaire commun à deux réflecteurs voisins a une valeur minimum d'environ 18 mrad. Pour la configuration correspondant à la valeur minimum de la distance OOi, soit dmin, la distance entre le point source S et le centre O, pour laquelle un reflet est toujours assuré a pour valeur minimum Dmin qui est approximativement égal à 4,6 h.

La figure 31 représente la vue de face du réflecteur combiné D_{CCC} et correspond à la projection orthogonale perpendiculairement à la face de centre F1 du réflecteur central Re1. Sur cette figure, la taille du dodécaèdre est celle pour laquelle ses faces sont coplanaires et concentriques en Fi avec les faces des réflecteurs. Seules les faces avant des réflecteurs Re1 à Re6 de centre F1 à F6 sont représentées, les réflecteurs Re7 à Re12 non représentés sont respectivement les symétriques des réflecteurs Re1 à Re6 par rapport au centre O du dodécaèdre. Les arêtes particulières a1 à a5 du dodécaèdre donnent l'orientation évoquée plus haut de chacun des six réflecteurs Rei autour de son axe OFi comme suit :
- le côté de la face avant de Re1 proche de a1 est parallèle à a1,
- le côté de la face avant de Re2 proche de a2 est parallèle à a2,
- le côté de la face avant de Re3 proche de a3 est parallèle à a3,
- le côté de la face avant de Re4 proche de a4 est parallèle à a4,
- le côté de la face avant de Re5 proche de a5 est parallèle à a5,
- le côté de la face avant de Re6 proche de a1 est parallèle à a1.

Cette figure 31 correspond, pour une dimension h donnée de réflecteurs, à la configuration la plus compacte du réflecteur combiné, à savoir OOi égal à dmin. Par conséquent, pour chaque réflecteur, deux des trois sommets de la face avant sont sur les arêtes du dodécaèdre. Par ailleurs, excepté pour Re6, ces deux sommets sont jointifs avec les sommets homologues des réflecteurs voisins.

On peut, bien entendu, utiliser des variantes simples de ce dodécaèdre pour réaliser des solutions moins compactes. Là encore, il est possible, en répartissant de façon appropriée les couleurs, la forme, la transmission et le nombre des entailles des marques, d'identifier chaque coin de cube par son image sur les capteurs.

Dans une variante de cette quatrième combinaison, l'élément optique précédent peut être réduit à seulement six réflecteurs tétraédriques couvrant ainsi un demi-espace angulaire, soit 2π stéradians. La forme extérieure du réflecteur combiné est inscrite dans une demi-sphère, la figure 32 représente un tel agencement DD_{CCC} en perspective. Seules quatre des faces d'entrée des six coins de cube sont visibles sur cette figure.

Les systèmes de détection selon l'invention sont utilisés principalement dans des applications de détection de posture de casque, l'ensemble optique à coins de cube étant monté sur ledit casque. Les combinaisons de coins de cube précédentes peuvent toutes être montées sur un casque.

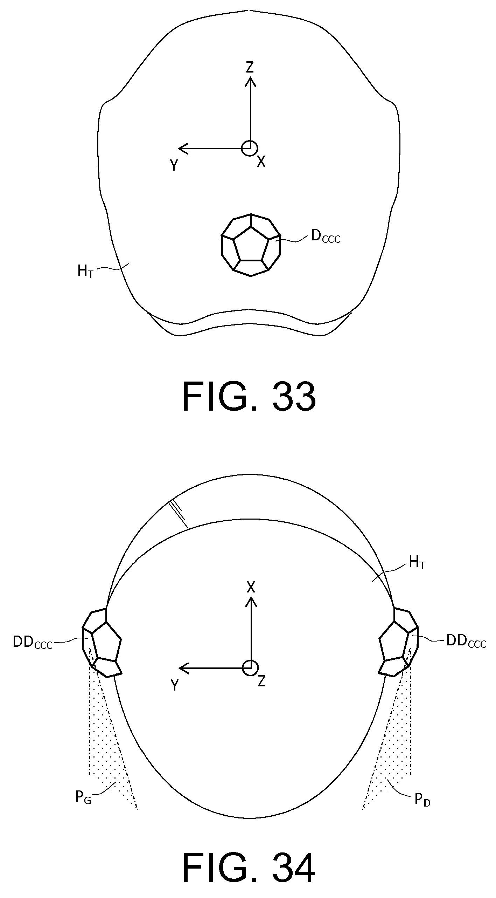

Lorsque l'élément optique comportant les coins de cube est le dodécaèdre précédent à douze coins de cube, on supprime un des coins de cube, par exemple le réflecteur Re12 pour permettre la fixation de l'élément optique sur le casque. Pour la mesure, on conserve onze réflecteurs tétraédriques Re1 à Re11. La figure 33 représente cet élément optique D_{CCC} monté à l'arrière d'un casque H_{T}. Sur cette figure, le casque est représenté dans le repère (X, Y, Z) et est vu de dos. La forme extérieure du réflecteur combiné est inscrite dans une sphère et l'angle solide couvert vaut alors 11π/3 sr, ce qui est tout à fait compatible des champs angulaires de mesure des systèmes à détection de posture.

Lorsque l'élément optique comportant les coins de cube est un demi-dodécaèdre précédent à six coins de cube, il est nécessaire d'en disposer deux sur les côtés du casque comme on le voit sur la figure 34. Les combinés DD_{CCC} sont centrés à gauche et à droite sur le casque. Chaque élément optique DD_{CCC} couvre un demi-espace angulaire limité par un des deux plans Pd ou Pg d'orientations proches de celle du plan vertical de symétrie (x, z) du casque. Les deux éléments optiques utilisent le même dispositif fixe électro-optique comportant une source ponctuelle et le ou les capteurs matriciels.

## Revendications

1. Système de détection de la posture d'un objet mobile dans l'espace comprenant un dispositif fixe électro-optique (DEO) d'orientation connue comprenant au moins une première source d'émission (S), des moyens d'analyse d'images et un ensemble optique comprenant au moins un coin de cube optique (CCC) apte à être disposé sur l'objet mobile, **caractérisé en ce que** :
- la face d'entrée du coin de cube est divisée en au moins trois zones colorées distinctes, chaque zone colorée comportant un filtre en transmission spectrale, chaque filtre transmettant uniquement une bande spectrale prédéterminée et différente de celles des autres filtres en transmission spectrale ;
- chaque côté desdites zones colorées comportant un marquage spécifique permettant d'identifier cedit côté ;
- le spectre de la source d'émission (S) ayant au moins une largeur spectrale égale à la somme des bandes spectrales desdits filtres en transmission spectrale ;
- le dispositif fixe électro-optique (DEO) d'orientation comporte au moins un capteur matriciel couleur sensible dans la bande spectrale de la source d'émission ;
- les moyens d'analyse d'images comportent des moyens de détermination de formes et de caractéristiques géométriques dans les images reçues par le capteur matriciel couleur et d'analyse des lignes de fuite, permettant de retrouver la position et l'orientation du coin de cube optique.

2. Système de détection selon la revendication 1, **caractérisé en ce que** la face d'entrée du coin de cube étant triangulaire, elle est divisée en trois zones colorées triangulaires identiques.

3. Système de détection selon la revendication 2, **caractérisé en ce que** la face d'entrée du coin de cube étant triangulaire, elle comporte trois zones colorées triangulaires identiques entourant une zone centrale triangulaire transparente dépourvue de filtre en transmission spectrale.

4. Système de détection selon la revendication 1, **caractérisé en ce que** les marquages spécifiques sont des marquages géométriques et/ou photométriques (MC, MT, MR).

5. Système de détection selon l'une des revendications précédentes, **caractérisé en ce que** l'ensemble optique comporte quatre coins de cube (Re1, Re2, Re3, Re4) tétraédriques adjacents et de forme identiques, chaque coin de cube comportant une face d'entrée, deux faces latérales réfléchissantes communes à deux autres coins de cube et une troisième face latérale réfléchissante située dans un plan commun aux autres troisièmes faces latérales des trois autres coins de cube, les dites troisièmes faces latérales formant ainsi un carré, les quatre faces d'entrée et ledit carré formant un pentaèdre en forme de pyramide à base carrée.

6. Système de détection selon l'une des revendications 1 à 4, **caractérisé en ce que** l'ensemble optique comporte quatre coins de cube (Re1, Re2, Re3, Re4) tétraédriques de formes identiques disposés symétriquement autour d'un unique sommet commun aux quatre coins de cube, chaque coin de cube comportant une face d'entrée.

7. Système de détection selon l'une des revendications 5 ou 6, **caractérisé en ce que** les faces d'entrée des quatre coins de cube comportent un même premier triplet de zones colorées.

8. Système de détection selon l'une des revendications 5 ou 6, **caractérisé en ce que** les faces d'entrée du premier et du second coin de cube comportent un même premier triplet de zones colorées et **en ce que** les faces d'entrée du troisième et du quatrième coin de cube comportent un même second triplet de zones colorées, différent du premier triplet de zones colorées.

9. Système de détection selon l'une des revendications 5 à 8, **caractérisé en ce que** les faces d'entrée du premier et du second coin de cube comportent un filtre neutre de transmission prédéterminée.

10. Système de détection selon l'une des revendications 5 à 9, **caractérisé en ce que** le marquage spécifique des côtés des zones colorées de chaque face d'entrée est agencé de façon à pouvoir distinguer cette face des trois autres.

11. Système de détection selon l'une des revendications 1 à 4, **caractérisé en ce que** l'ensemble optique comporte huit coins de cube (Re1, Re2, Re3, Re4, Re5, Re6, Re7, Re8) tétraédriques adjacents et de forme identiques, chaque coin de cube comportant une face d'entrée, trois faces latérales réfléchissantes communes à trois autres coins de cube, les huit faces d'entrée formant un octaèdre régulier.

12. Système de détection selon la revendication 11, **caractérisé en ce que** les faces d'entrée des huit coins de cube comportent un même premier triplet de zones colorées.

13. Système de détection selon la revendication 11, **caractérisé en ce que** les faces d'entrée du premier, du second, du troisième et du quatrième coin de cube comportent un même premier triplet de zones colorées et **en ce que** les faces d'entrée du cinquième, du sixième, du septième et du huitième coin de cube comportent un même second triplet de zones colorées, différent du premier triplet de zones colorées.

14. Système de détection selon l'une des revendications 11 à 13, **caractérisé en ce que** les faces d'entrée de quatre coins de cube comportent un filtre neutre de transmission prédéterminée.

15. Système de détection selon l'une des revendications 11 à 14, **caractérisé en ce que** le marquage spécifique des côtés des zones colorées de chaque face d'entrée est agencé de façon à pouvoir distinguer cette face des sept autres.

16. Système de détection selon l'une des revendications 1 à 4, **caractérisé en ce que** l'ensemble optique comporte une pluralité de coins de cube (Re1, Re2, Re3, Re4, Re5, Re6) dont les faces d'entrée sont orientées et positionnées selon les faces pentagonales d'un dodécaèdre régulier ou d'une partie d'un dodécaèdre, chaque face d'entrée étant orientée dans chaque face pentagonale de façon que l'ensemble optique produise, dans une plage d'orientation déterminée, un reflet sur le détecteur, le marquage spécifique des côtés des zones colorées de chaque face d'entrée étant agencé de façon à pouvoir distinguer cette face d'entrée de toutes les autres.

17. Système de détection selon l'une des revendications précédentes, **caractérisé en ce que** le dispositif fixe électro-optique (DEO) comporte au moins une source d'émission ponctuelle (S) et uniquement des composants optiques (m, m') ayant une puissance optique nulle ou quasi-nulle, c'est-à-dire des miroirs plans ou des lames planes semi-réfléchissantes, la séparation entre la source d'émission ponctuelle et la lumière réfléchie par le ou les coins de cube étant réalisée au moyen d'une lame plane semi-réfléchissante.

18. Système de détection selon l'une des revendications précédentes, **caractérisé en ce que** les moyens d'analyse comportent un prétraitement électronique disposé à la sortie du ou des capteurs matriciels et permettant d'attribuer à chaque pixel un code à trois composantes, chaque composante étant représentative d'une bande spectrale prédéterminée, chaque composante étant codée sur un nombre limité de niveaux représentatif de l'absence ou de la présence de lumière reçue dans la dite bande spectrale.

19. Casque de pilote, **caractérisé en ce qu'**il comporte au moins un coin de cube optique dont la face d'entrée est divisée en au moins trois zones colorées distinctes, chaque zone colorée comportant un filtre en transmission spectrale, chaque filtre transmettant uniquement une bande spectrale prédéterminée et différente de celles des autres filtres en transmission spectrale, chaque côté desdites zones colorées comportant un marquage spécifique permettant d'identifier ce dit côté, ledit coin de cube destiné à fonctionner dans un système de détection de la posture d'un objet mobile selon l'une des revendications 1 à 18.

20. Casque de pilote selon la revendication 19, **caractérisé en ce qu'**il comporte au moins un dodécaèdre régulier (D_{CCC}) comportant une pluralité de faces identiques et pentagonales comportant chacune un coin de cube agencé de façon que chaque face d'entrée dudit coin de cube soit située et centrée sur une desdites faces pentagonales et orientée dans cette face pentagonale de façon que l'ensemble optique produise, dans une plage d'orientation déterminée, un reflet sur le détecteur, le marquage spécifique des côtés des zones colorées de chaque face d'entrée étant agencé de façon à pouvoir distinguer cette face d'entrée de toutes les autres.

21. Casque de pilote selon la revendication 19, **caractérisé en ce qu'**il comporte au moins deux demi-dodécaèdres réguliers (DD_{CCC}) identiques comportant chacun six faces identiques et pentagonales comportant chacune un coin de cube agencé de façon que chaque face d'entrée dudit coin de cube soit située et centrée sur une desdites faces pentagonales et orientée dans cette face pentagonale de façon que l'ensemble optique produise, dans une plage d'orientation déterminée, un reflet sur le détecteur, le marquage spécifique des côtés des zones colorées de chaque face d'entrée étant agencé de façon à pouvoir distinguer cette face d'entrée de toutes les autres.

## Patentansprüche

1. System zum Erkennen der Haltung eines mobilen Objekts im Raum, das eine feste elektrooptische Vorrichtung (DEO) einer bekannten Orientierung umfasst, die wenigstens eine erste Sendequelle (S), Bildanalysemittel und eine optische Baugruppe umfasst, die wenigstens eine optische Würfelecke (CCC) aufweist, die an dem mobilen Objekt angeordnet werden kann, **dadurch gekennzeichnet, dass**:
- die Eintrittsfläche der Würfelecke in wenigstens drei separate gefärbte Zonen unterteilt ist, wobei jede gefärbte Zone ein Spektraltransmissionsfilter umfasst, wobei jedes Filter nur ein vorbestimmtes Spektralband durchlässt, das sich von denen der anderen Spektraltransmissionsfilter unterscheidet;
- jede Seite der gefärbten Zonen eine spezifische Markierung umfasst, die die Identifikation dieser Seite zulässt;
- das Spektrum der Sendequelle (S) wenigstens eine Spektralbreite hat, die gleich der Summe der Spektralbänder der Spektraltransmissionsfilter ist;
- die feste elektrooptische Vorrichtung (DEO) einer bekannten Orientierung wenigstens einen Farbmatrixsensor umfasst, der für das Spektralband der Sendequelle empfindlich ist;
- die Bildanalysemittel Mittel zum Ermitteln von Formen und geometrischen Charakteristiken in den von dem Farbmatrixsensor empfangenen Bildern und zum Analysieren von Fluchtlinien umfasst, die das Finden der Position und der Orientierung der optischen Würfelecke zulassen.

2. Erkennungssystem nach Anspruch 1, **dadurch gekennzeichnet, dass** die Eintrittsfläche der Würfelecke, da sie dreieckig ist, in drei identische dreieckige gefärbte Zonen unterteilt ist.

3. Erkennungssystem nach Anspruch 2, **dadurch gekennzeichnet, dass** die Eintrittsfläche der Würfelecke, da sie dreieckig ist, drei identische dreieckige gefärbte Zonen umfasst, die eine zentrale transparente dreieckige Zone ohne Spektraltransmissionsfilter umgeben.

4. Erkennungssystem nach Anspruch 1, **dadurch gekennzeichnet, dass** die spezifischen Markierungen geometrische und/oder fotometrische Markierungen (MC, MT, MR) sind.

5. Erkennungssystem nach einem der vorherigen Ansprüche, **dadurch gekennzeichnet, dass** die optische Baugruppe vier benachbarte tetraedrische und identisch geformte Würfelecken (Re1, Re2, Re3, Re4) umfasst, wobei jede Würfelecke eine Eintrittsfläche, zwei laterale reflektierende Flächen, die zwei anderen Würfelecken gemeinsam sind, und eine dritte laterale reflektierende Fläche umfasst, die sich in einer Ebene befindet, die den anderen dritten lateralen Flächen der anderen drei Würfelecken gemeinsam ist, wobei die dritten lateralen Flächen somit ein Quadrat bilden, wobei die vier Eintrittsflächen und das Quadrat ein pyramidenförmiges Pentaeder mit quadratischer Basis bilden.

6. Erkennungssystem nach einem der Ansprüche 1 bis 4, **dadurch gekennzeichnet, dass** die optische Baugruppe vier tetraedrische, identisch geformte Würfelecken (Re1, Re2, Re3, Re4) umfasst, die symmetrisch um einen einzigen Scheitelpunkt angeordnet sind, der den vier Würfelecken gemeinsam ist, wobei jede Würfelecke eine Eintrittsfläche hat.

7. Erkennungssystem nach Anspruch 5 oder 6, **dadurch gekennzeichnet, dass** die Eintrittsflächen der vier Würfelecken dasselbe erste Triplett von gefärbten Zonen haben.

8. Erkennungssystem nach Anspruch 5 oder 6, **dadurch gekennzeichnet, dass** die Eintrittsflächen der ersten und der zweiten Würfelecke dasselbe erste Triplett von gefärbten Zonen umfassen, und dadurch, dass die Eintrittsflächen der dritten und der vierten Würfelecke dasselbe zweite Triplett von gefärbten Zonen umfassen, das sich von dem ersten Triplett von gefärbten Zonen unterscheidet.

9. Erkennungssystem nach einem der Ansprüche 5 bis 8, **dadurch gekennzeichnet, dass** die Eintrittsflächen der ersten und der zweiten Würfelecke ein neutrales Filter mit einer vorbestimmten Transmission beinhalten.

10. Erkennungssystem nach einem der Ansprüche 5 bis 9, **dadurch gekennzeichnet, dass** die spezifische Markierung auf den Seiten der gefärbten Zonen jeder Eintrittsfläche so angeordnet ist, dass diese Fläche von den anderen drei Flächen unterschieden werden kann.

11. Erkennungssystem nach einem der Ansprüche 1 bis 4, **dadurch gekennzeichnet, dass** die optische Baugruppe acht benachbarte tetraedrische und identisch geformte Würfelecken (Re1, Re2, Re3, Re4, Re5, Re6, Re7, Re8) umfasst, wobei jede Würfelecke eine Eintrittsfläche aufweist, wobei drei laterale reflektierende Flächen den drei anderen Würfelecken gemeinsam sind, wobei die acht Eintrittsflächen ein rechteckiges Oktaeder bilden.

12. Erkennungssystem nach Anspruch 11, **dadurch gekennzeichnet, dass** die Eintrittsflächen der acht Würfelecken dasselbe erste Triplett von gefärbten Zonen haben.

13. Erkennungssystem nach Anspruch 11, **dadurch gekennzeichnet, dass** die Eintrittsflächen der ersten, zweiten, dritten und vierten Würfelecke dasselbe Triplett von gefärbten Zonen umfassen, und dadurch, dass die Eintrittsflächen der fünften, sechsten, siebten und achten Würfelecke dasselbe zweite Triplett von gefärbten Zonen haben, das sich von dem ersten Triplett von gefärbten Zonen unterscheidet.

14. Erkennungssystem nach einem der Ansprüche 11 bis 13, **dadurch gekennzeichnet, dass** die Eintrittsflächen der vier Würfelecken ein neutrales Filter mit einer vorbestimmten Transmission umfassen.

15. Erkennungssystem nach einem der Ansprüche 11 bis 14, **dadurch gekennzeichnet, dass** die spezifische Markierung an den Seiten der gefärbten Zonen jeder Eintrittsfläche so angeordnet ist, dass diese Fläche von den anderen sieben Flächen unterschieden werden kann.

16. Erkennungssystem nach einem der Ansprüche 1 bis 4, **dadurch gekennzeichnet, dass** die optische Baugruppe mehrere Würfelecken (Re1, Re2, Re3, Re4, Re5, Re6) aufweist, deren Eintrittsflächen entlang den pentagonalen Flächen eines regelmäßigen Dodekaeders oder eines Teils eines Dodekaeders orientiert und positioniert sind, wobei jede Eintrittsfläche in jeder pentagonalen Fläche so orientiert ist, dass die optische Fläche, in einem bestimmten Orientierungsbereich, eine Reflexion auf dem Detektor produziert, wobei die spezifische Markierung auf den Seiten der gefärbten Zonen jeder Eintrittsfläche so angeordnet ist, dass diese Eintrittsfläche von allen anderen Eintrittsflächen unterschieden werden kann.

17. Erkennungssystem nach einem der vorherigen Ansprüche, **dadurch gekennzeichnet, dass** die feste elektrooptische Vorrichtung (DEO) wenigstens eine Punktsendequelle (S) und nur optische Komponenten (m, m') mit null oder quasi null optischer Leistung umfasst, d.h. flache Spiegel oder flache teilreflektierende Platten, wobei die Trennung zwischen der Punktsendequelle und dem von den ein oder mehreren Würfelecken reflektierten Licht mittels einer flachen teilreflektiven Platte realisiert wird.

18. Erkennungssystem nach einem der vorherigen Ansprüche, **dadurch gekennzeichnet, dass** die Analysemittel eine elektronische Vorverarbeitung beinhalten, die am Ausgang des oder der Matrixsensors-/en angeordnet ist und die Zuordnung eines Drei-Komponenten-Code zu jedem Pixel zulässt, wobei jede Komponente ein vorbestimmtes Spektralband repräsentiert, wobei jede Komponente auf einer begrenzten Anzahl von Niveaus codiert ist, die die An- oder Abwesenheit von in dem Spektralband empfangenem Licht repräsentiert.

19. Pilotenhelm, **dadurch gekennzeichnet, dass** er wenigstens eine optische Würfelecke umfasst, deren Eintrittsfläche in wenigstens drei separate gefärbte Zonen unterteilt ist, wobei jede gefärbte Zone ein Spektraltransmissionsfilter umfasst, wobei jedes Filter nur ein vorbestimmtes Spektralband durchlässt, das sich von denen der anderen Spektraltransmissionsfilter unterscheidet, wobei jede Seite der gefärbten Zonen eine spezifische Markierung umfasst, die die Identifikation dieser Seite zulässt, wobei die Würfelecke für den Betrieb in einem System zum Erkennen der Haltung eines mobilen Objekts nach einem der Ansprüche 1 bis 18 gedacht ist.

20. Pilotenhelm nach Anspruch 19, **dadurch gekennzeichnet, dass** er wenigstens ein regelmäßiges Dodekaeder (D_{ccc}) umfasst, das mehrere identische und pentagonale Flächen umfasst, die jeweils eine Würfelecke umfassen, die so angeordnet ist, dass sich jede Eintrittsfläche der Würfelecke auf einer der pentagonalen Flächen befindet und darauf zentriert ist und in dieser pentagonalen Fläche so orientiert ist, dass die optische Baugruppe, in einem vorbestimmten Orientierungsbereich, eine Reflexion auf dem Detektor produziert, wobei die spezifische Markierung auf den Seiten der gefärbten Zonen jeder Eintrittsfläche so angeordnet ist, dass diese Eintrittsfläche von allen anderen Eintrittsflächen unterschieden werden kann.

21. Pilotenhelm nach Anspruch 19, **dadurch gekennzeichnet, dass** er wenigstens zwei identische regelmäßige Teil-Dodekaeder (DD_{ccc}) umfasst, die jeweils sechs identische und pentagonale Flächen umfassen, die jeweils eine Würfelecke umfassen, die so ausgelegt ist, dass sich jede Eintrittsfläche der Würfelecke auf einer der pentagonalen Flächen befindet und darauf zentriert ist und in dieser pentagonalen Fläche so orientiert ist, dass die optische Baugruppe, in einem bestimmten Orientierungsbereich, eine Reflexion auf dem Detektor produziert, wobei die spezifische Markierung auf den Seiten der gefärbten Zonen jeder Eintrittsfläche so angeordnet ist, dass diese Eintrittsfläche von allen anderen Eintrittsflächen unterschieden werden kann.

## Claims

1. A system for detecting the posture of a mobile object in space, comprising a fixed electro-optical device (DEO) with a known orientation comprising at least one first transmission source (S), means for analysing images and an optical assembly comprising at least one optical cube corner (CCC) capable of being disposed on said mobile object, **characterised in that**:
- the entry face of the cube corner is divided into at least three distinct coloured zones, each coloured zone comprising a spectral transmission filter, each filter only transmitting a predetermined spectral band that is different from that of the other spectral transmission filters;
- each side of said coloured zones comprises a specific marking that allows this side to be identified;
- the spectrum of said transmission source (S) has at least one spectral width that is equal to the sum of the spectral bands of said spectral transmission filters;
- said fixed electro-optical device (DEO) with a known orientation comprises at least one colour matrix sensor that is sensitive in the spectral band of said transmission source;
- said image analysis means comprise means for determining shapes and geometric characteristics in the images received by the colour matrix sensor and for analysing vanishing lines allowing the position and the orientation of the optical cube corner to be found.

2. The detection system according to claim 1, **characterised in that** as the entry face of the cube corner is triangular, it is divided into three identical triangular coloured zones.

3. The detection system according to claim 2, **characterised in that** as the entry face of the cube corner is triangular, it comprises three identical triangular coloured zones surrounding a central transparent triangular zone without a spectral transmission filter.

4. The detection system according to claim 1, **characterised in that** the specific markings are geometric and/or photometric markings (MC, MT, MR).

5. The detection system according to any one of the preceding claims, **characterised in that** said optical assembly comprises four adjacent tetrahedral and identically shaped cube corners (Re1, Re2, Re3, Re4), each cube corner comprising one entry face, two lateral reflective faces common to the other two cube corners and one third lateral reflective face located in a plane common to the other third lateral faces of the other three cube corners, said third lateral faces thus forming a square, the four entry faces and said square forming a square-based, pyramid-shaped pentahedron.

6. The detection system according to any one of claims 1 to 4, **characterised in that** said optical assembly comprises four tetrahedral, identically shaped cube corners (Re1, Re2, Re3, Re4) symmetrically disposed about a single vertex common to the four cube corners, each cube corner comprising one entry face.

7. The detection system according to any one of claims 5 or 6, **characterised in that** the entry faces of the four cube corners comprise the same first triplet of coloured zones.

8. The detection system according to any one of claims 5 or 6, **characterised in that** the entry faces of the first and of the second cube corner comprise the same first triplet of coloured zones and **in that** the entry faces of the third and of the fourth cube corner comprise the same second triplet of coloured zones, which is different from the first triplet of coloured zones.

9. The detection system according to any one of claims 5 to 8, **characterised in that** the entry faces of the first and of the second cube corner comprise a neutral filter having a predetermined transmission.

10. The detection system according to any one of claims 5 to 9, **characterised in that** the specific marking on the sides of the coloured zones of each entry face is arranged so as to be able to distinguish this face from the other three faces.

11. The detection system according to any one of claims 1 to 4, **characterised in that** the optical assembly comprises eight adjacent tetrahedral and identically shaped cube corners (Re1, Re2, Re3, Re4, Re5, Re6, Re7, Re8), each cube corner comprising one entry face, three lateral reflective faces common to the three other cube corners, with the eight entry faces forming a regular octahedron.

12. The detection system according to claim 11, **characterised in that** the entry faces of the eight cube corners comprise the same first triplet of coloured zones.

13. The detection system according to claim 11, **characterised in that** the entry faces of the first, the second, the third and the fourth cube corner comprise the same first triplet of coloured zones and **in that** the entry faces of the fifth, the sixth, the seventh and the eighth cube corner comprise the same second triplet of coloured zones, which is different from the first triplet of coloured zones.

14. The detection system according to any one of claims 11 to 13, **characterised in that** the entry faces of the four cube corners comprise a neutral filter having a predetermined transmission.

15. The detection system according to any one of claims 11 to 14, **characterised in that** the specific marking on the sides of the coloured zones of each entry face is arranged so as to be able to distinguish this face from the other seven faces.

16. The detection system according to any one of claims 1 to 4, **characterised in that** the optical assembly comprises a plurality of cube corners (Re1, Re2, Re3, Re4, Re5, Re6), the entry faces of which are oriented and positioned along the pentagonal faces of a regular dodecahedron or of part of a dodecahedron, with each entry face being oriented in each pentagonal face so that said optical face produces, in a determined range of orientation, a reflection on said detector, with the specific marking on the sides of the coloured zones of each entry face being arranged so as to be able to distinguish this entry face from all of the other entry faces.

17. The detection system according to any one of the preceding claims, **characterised in that** said fixed electro-optical device (DEO) comprises at least one point transmission source (S) and only optical components (m, m') having zero or practically zero optical power, i.e. flat mirrors or flat semi-reflective plates, with the separation between the point transmission source and the light reflected by the one or more cube corners being realised by means of a flat semi-reflective plate.

18. The detection system according to any one of the preceding claims, **characterised in that** said analysis means comprise an electronic pre-processing that is arranged at the output of the one or more matrix sensors and allows a three-component code to be assigned to each pixel, each component representing a predetermined spectral band, each component being encoded on a limited number of levels representing the absence or the presence of light received in said spectral band.

19. A flight helmet, **characterised in that** it comprises at least one optical cube corner, the entry face of which is divided into at least three distinct coloured zones, each coloured zone comprising a spectral transmission filter, each filter transmitting only a predetermined spectral band that is different from those of the other spectral transmission filters, each side of said coloured zones comprising a specific marking allowing this side to be identified, said cube corner being intended to operate in a system for detecting the posture of a mobile object according to any one of claims 1 to 18.

20. The flight helmet according to claim 19, **characterised in that** it comprises at least one regular dodecahedron (D_{ccc}) comprising a plurality of identical and pentagonal faces each comprising a cube corner arranged so that each entry face of said cube corner is located and centred on one of said pentagonal faces and is oriented in this pentagonal face so that said optical assembly produces, in a predetermined range of orientation, a reflection on said detector, with the specific marking on the sides of the coloured zones of each entry face being arranged so as to be able to distinguish this entry face from all of the other entry faces.

21. The flight helmet according to claim 19, **characterised in that** it comprises at least two identical regular semi-dodecahedrons (DD_{ccc}) each comprising six identical and pentagonal faces each comprising a cube corner arranged so that each entry face of said cube corner is located and centred on one of said pentagonal faces and is oriented in this pentagonal face so that said optical assembly produces, in a predetermined range of orientation, a reflection on said detector, with the specific marking on the sides of the coloured zones of each entry face being arranged so as to be able to distinguish this entry face from all of the other entry faces.
